# EUROPEAN PATENT APPLICATION

(11) **EP 4 753 273 A1**
(43) Date of publication of application: **03.06.2026**
(21) Application number: 24315546.2
(22) Date of filing: 02.12.2024
(51) Int. Cl.: H04N 21/845

(54) **METHOD AND APPARATUS FOR AGGREGATING AND OBTAINING VIDEO DATA UNITS**

(71) Applicant: Beijing Xiaomi Mobile Software Co., Ltd., Beijing Beijing 100085 (CN)
(72) Inventor: Thomas, Emmanuel, Beijing, 100085 (CN); Potetsianakis, Emmanouil, Beijing, 100085 (CN); Alexiou, Evangelos, Beijing, 100085 (CN)
(74) Representative: Pfitzner, Hannes

(57) **Abstract**

An embodiment of the invention provides a method for aggregating video data units, the method comprising:
- obtaining a plurality of video data units;
- determining at least a subset of the plurality of video data units; the subset comprising at least two video data units; and.
- aggregating the subset to obtain an aggregating video data unit.

## Description

### Technical Field

The present disclosure generally relates to the field of encoding/decoding pictures, images or videos, and embodiments of the present disclosure concern improvements regarding aggregating video data units and obtaining video data units. More specific embodiments of the present disclosure relate to methods and apparatuses for aggregating video data units (e.g. NAL units) to an aggregated video data unit and extracting video data units (e.g. NAL units).

### Background

A video bitstream is the data stream which results from the compression of an uncompressed video sequence. The video bitstream is thus the output of a video encoder and it can be fed as input of a video decoder to reconstruct the encoded video. The reconstructed video sequence may be identical to the input video sequence in which case the encoding is considered lossless. Otherwise, the encoding is considered lossy.

In the prior art, there are different standards, like WC standard, which are NAL-based video coding standards (Network Abstraction Layer based video coding standards) and other video coding standards such as AV1 which are based on different video data units. The byte stream format of those video coding standards induces bitrate overhead due to delimiters, start code, video data unit length information, etc... inserted prior to each video data units. In cases where there are frequent video data units and/or the video data units' size are small in comparison with the sizes of those elements inserted in the byte stream then the bitrate overhead is significant. In addition, encapsulation process of video bitstreams into file or network packet may not need to parse the bitstream at the same granularity as the one of the video bitstream. For instance, a video coded picture may be composed of two or more video data units whereas an encapsulation process may only be interested in the set of video data units composing a single video coded picture. As a result, parsing each individual video data unit for a given coded picture requires extra parsing logic to derive when a video coded picture ends and when a new video coded picture starts. Therefore, there is the need to reduce the bitrate overhead, especially of possible byte stream formats as well as to simplify the signaling for parsing those byte streams and bitstreams.

### Summary

A 1^{st} embodiment may have a method for aggregating video data units, the method comprising:
- obtaining a plurality of video data units;
- determining at least a subset of the plurality of video data units; the subset comprising at least two video data units; and
- aggregating the subset to obtain an aggregating video data unit.

A 2^{nd} embodiment may have the method according to the 1^{st} embodiment, wherein the aggregating video data unit is formatted as a new video data unit.

A 3^{rd} embodiment may have the method according to the 1^{st} or 2^{nd} embodiment, further comprising adding only one start code for the aggregating video data unit which corresponds to the subset; and/or
further comprising adding one combined header (header having reduced size) for the aggregating video data unit and/or the subset.

A 4^{th} embodiment may have the method according to one of the 1^{st} to 3^{rd} embodiments, wherein aggregating is performed as long as there are one or more video data units to be aggregated; or
wherein aggregating is performed as long as there are one or more video data units to be aggregated.

A 5^{th} embodiment may have the method according to one of the 1^{st} to 4^{th} embodiments, wherein determining the at least a subset is performed so that video data units of the subset belong to a same logical group.

A 6^{th} embodiment may have the method according to one of the 1^{st} to 5^{th} embodiments, wherein the logical group comprises video data units of the subset belonging to a same coded picture (e.g. single coded picture or slices of a single coded picture) and/or comprising slices of a single coded picture; and/or
wherein the logical group comprises video data units of the subset belonging to a same access unit.

A 7^{th} embodiment may have the method according to one of the 1^{st} to 6^{th} embodiments, wherein determining the at least a subset is performed so that video data units of the subset belonging to same unit type or grouping type (e.g. NAL type) or same category (e.g. correspond to a single coded picture) are determined to be aggregated; and/or wherein determining the at least a subset is performed so that video data units of the subset consecutive in bitstream order are determined to be aggregated; and/or wherein determining the at least a subset is performed so that aggregation only takes place within the same spatial layer and/or within the same temporal layer.

An 8^{th} embodiment may have the method according to one of the 1^{st} to 7^{th} embodiments, further comprising adapting or adding an information in aggregating video data unit, especially an offset, to indicate one or more starting positions of the aggregated video data units in the aggregating video unit.

A 9^{th} embodiment may have the method according to one of the 1^{st} to 8^{th} embodiments, further comprising adapting or adding one or more length information in an aggregating video data unit, especially a length, to indicate the size in bytes of the aggregated video data units in the aggregating video data unit.

A 10^{th} embodiment may have the method according to one of the 1^{st} to 9^{th} embodiments, further comprising adapting or adding an information in the aggregating video data unit, especially on a number of video data units, to indicate the amount of video data units aggregated in the aggregating video data unit.

An 11^{th} embodiment may have the method according to one of the 1^{st} to 10^{th} embodiments, further comprising assigning to the aggregating video data unit a video data unit type indicative of containing aggregated video data units, e.g. of different type or different classes (e.g. VCL and non-VCL aggregating NAL unit type).

A 12^{th} embodiment may have method for obtaining video data units, the method comprising:
- obtaining a video data unit, e.g. comprised in a video bitstream;
- determining if the video data unit comprises an aggregating video data unit;
- extracting a subset of the plurality of video data units from the aggregating video data unit.

A 13^{th} embodiment may have the method according to the 11^{th} embodiment, further comprising forwarding the unextracted subset of video data units or the video data units to be extracted dependent on the step of determining.

A 14^{th} embodiment may have a bitstream generator for aggregating video data units, the bitstream generator comprising:
- an interface for obtaining a plurality of video data units;
- a processor for determining at least a subset of the plurality of video data units; the subset comprising at least two video data units; and
- wherein the processor is configured to aggregate the subset to obtain an aggregating video data unit.

A 15^{th} embodiment may have a bitstream parser for obtaining video data units, the bitstream parser comprising:
- an interface for obtaining a video data unit, e.g. comprised by a video bitstream;
- a processor for determining if the video data unit comprises an aggregating video data unit; and
- wherein the processor is configured to extract a subset of the plurality of video data units from the aggregating video data unit.

### Brief Description of the Drawings

Fig. 1 illustrates an example of AVC NAL unit syntax to illustrate embodiments.
Fig. 2 illustrates an example of VVC NAL unit syntax [1] to illustrate embodiments.
Fig. 3 illustrates an example of VVC NAL unit type codes and NAL unit type classes to be used in embodiments.
Fig. 4 illustrates an example of 3 access units of a VVC bitstream to be used in embodiments.
Fig. 5 illustrates an example of one access unit made of 3 NAL units to be used in embodiments.
Fig. 6 illustrates an example of OBU syntax in AV1 to be used in embodiments.
Fig. 7 illustrates an example of OBU header syntax in AV1 to be used in embodiments.
Fig. 8 illustrates an example of byte stream format in VVC Annex B to be used in embodiments.
Fig. 9 illustrates an example of VVC bitstream as byte stream format with three access units to be used in embodiments.
Fig. 10 illustrates an example of VVC bitstream as byte stream format with one access unit to be used in embodiments.
Fig. 11 illustrates an example of AV1 length delimited bitstream format [2].
Fig. 12 illustrates an example of encoder and decoder scenario.
Fig. 13 illustrates an example of bitstream processor scenario.
Fig. 14 illustrates an example of file/network packet encapsulation scenario to be used in embodiments.
Fig. 15 illustrates an example of decoder logic according to embodiments.
Fig. 16 illustrates an example of bitstream parser logic according to embodiments.
Fig. 17 illustrates an example of file/packet de-encapsulation parsing logic according to embodiments.
Fig. 18 illustrates an example of byte concatenation of aggregated NAL units according to embodiments.
Fig. 19 illustrates an example of generic aggregation with byte offsets according to embodiments.
Fig. 20 illustrates an example of generic aggregation with length-prefixed NAL units.
Fig. 21 illustrates an example of generic aggregation with explicit number of aggregated NAL units according to embodiments.
Fig. 22 illustrates an example of generic aggregation according to embodiments.
Fig. 23 illustrates an example of categorised aggregation according to embodiments.
Fig. 24 illustrates an example of coded picture-based aggregation according to embodiments.
Fig. 25 illustrates an example of access unit aggregation according to embodiments.
Fig. 26 illustrates an example of reduced header according to embodiments.
Fig. 27 illustrates an example of optionally reduced header of aggregated NAL units according to embodiments.
Fig. 28 illustrates an example of generic aggregation with omitted headers by NALU type according to embodiments.

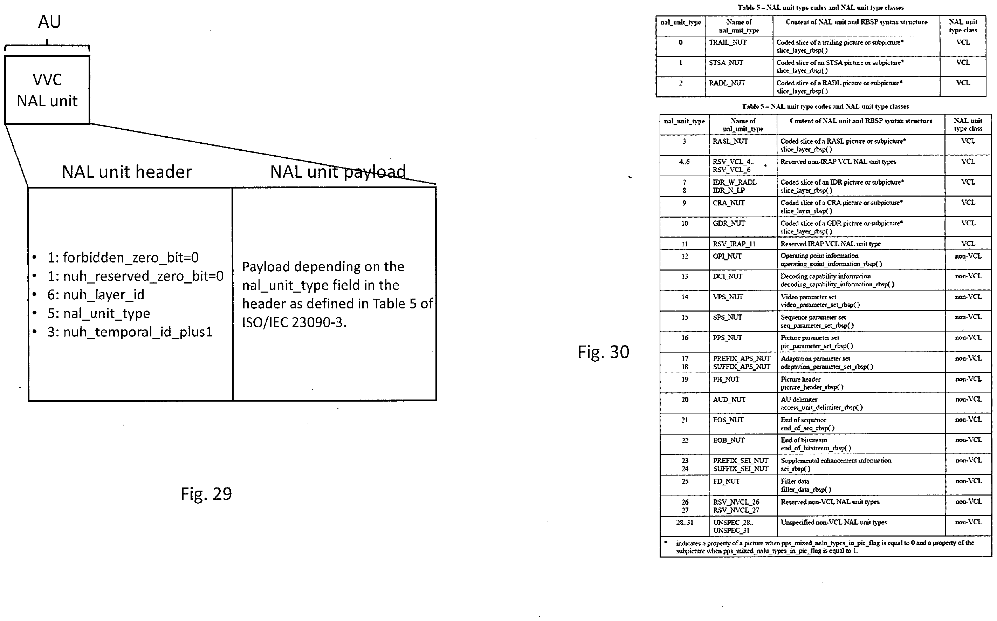

Fig. 29 illustrates an example of a NAL unit according to embodiments.
Fig. 30 illustrates an example of unit type codes and classes for embodiments.
Fig. 31 illustrates an example a processing device according to embodiments.

### Detailed Description

Illustrative embodiments of the present disclosure are described below with reference to the drawings, where various details of the embodiments of the present disclosure are included to facilitate understanding and are to be considered as illustrative only. Accordingly, those of ordinary skill in the art recognize that various changes and modifications of the embodiments described herein can be made without departing from the scope of the present disclosure. Also, descriptions of well-known functions and constructions are omitted from the following description for clarity and conciseness.

The drawings are explanatory and serve to explain the present disclosure, and are not to be construed to limit the present disclosure to the illustrated embodiments.

Below, technical background, especially details of the standards from which embodiments of the present invention can be used will be discussed before discussing the prior art together with its drawbacks and the resulting needs.

Note aggregated video data unit means a video data unit that is aggregated into an aggregating video data unit. Vice versa, aggregating video data unit means a video data unit that contains several aggregated video data units.

### Video data units

An example video data unit is a Network Abstraction Layer Unit (NALU) in AVC, HEVC, EVC, VVC.

### Based on Network Abstraction Layer Unit (NALU) in AVC, HEVC, EVC, VVC

NOTE VVC is used for the background since it is the latest video coding standard to date from the MPEG/ITU collaboration, and it will be used primarily for illustrating the embodiments. However, the invention is not limited to VVC but can be applied to any video coding standards NAL-based and others like AV1.

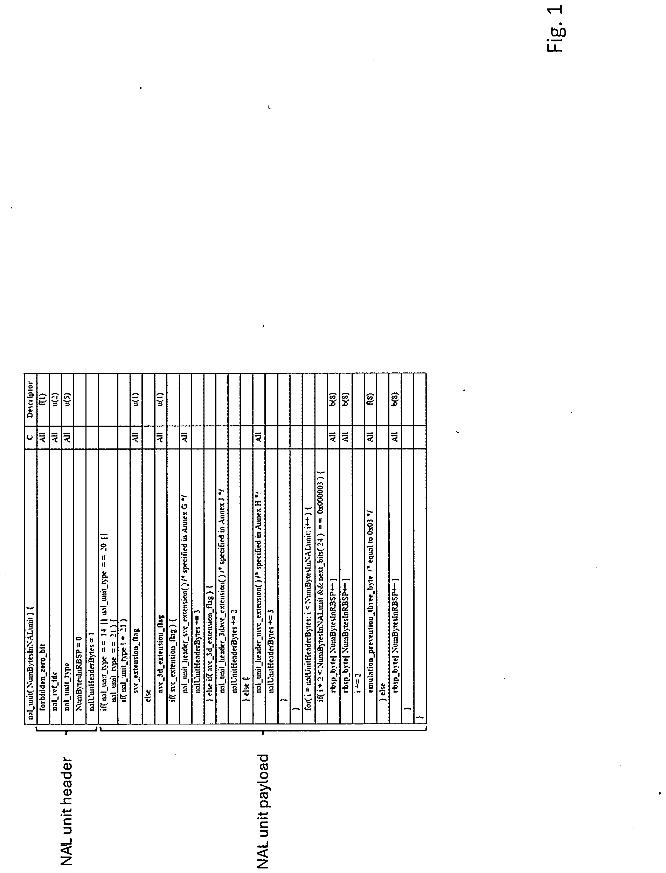

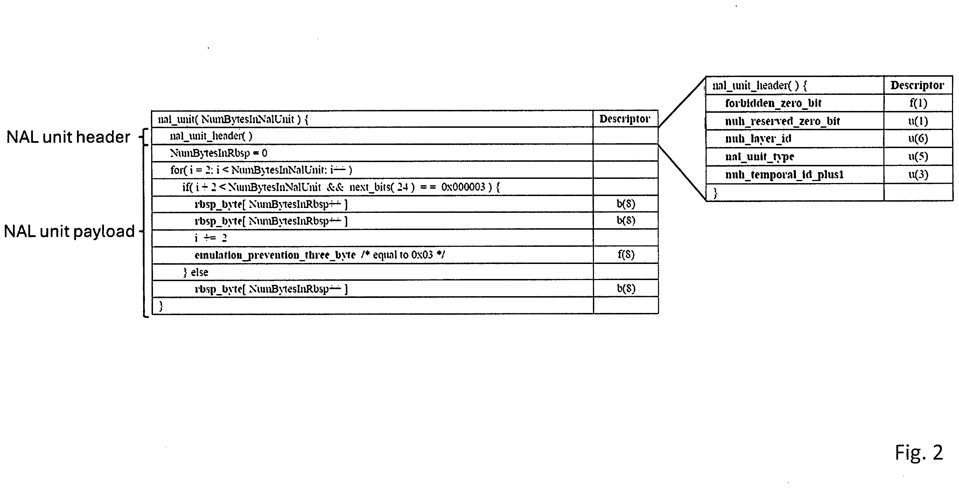

Since MPEG-4 part 101 Advanced Video Coding (AVC), the series of video coding standards jointly developped by MPEG and ITU adopts the concept of Network Abstraction Layer (NAL) units as the high-level data structure of a video bitstream. That is, a video bitstream conforming to AVC, HEVC, EVC or VVC is a sequence of NAL units. For each standard, a NAL unit is composed of a header followed by a payload. The header has always the same length for a given standard (omitting possible specific extensions in each standard). However, the syntax and size of the header may vary from one standard to another. For example, Fig. 1 represents the syntax of the AVC NAL unit. Another example is from the VVC standard as shown in Fig. 2 [1].

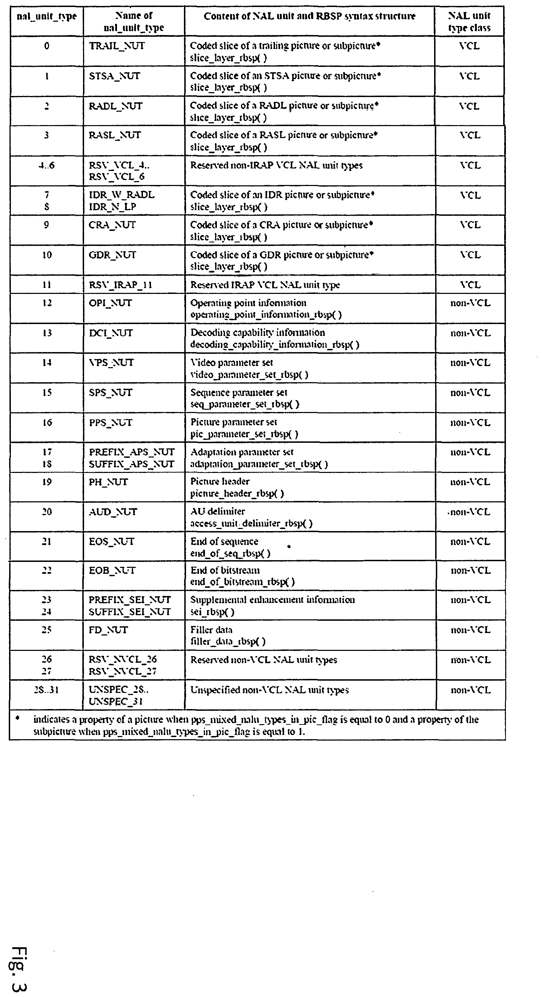

For example, in Fig. 3 the list of NAL unit types for the VVC standard (VVC NAL unit type codes and NAL unit type classes) is shown.

One or more VVC NAL units of a video bitstream constitute access units as defined in the VVC specification:
3.2 access unit (AU): A set of PUs that belong to different layers and contain coded pictures associated with the same time for output from the DPB.
3.106 picture unit (PU): A set of NAL units that are associated with each other according to a specified classification rule, are consecutive in decoding order, and contain exactly one coded picture.

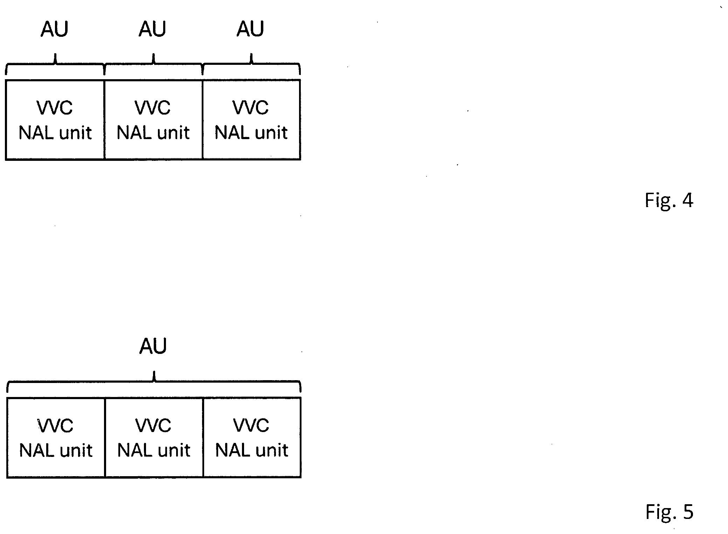

Note that the concept of access unit is generalizable to the smallest portion of a video bitstream to which is attached a presentation time. For example, in Fig. 4, three VVC NAL units are represented. Each of those NAL unit constitutes an access unit, thus each of them contains a coded picture. Fig. 5 shows a block diagram of an example of 3 access units of a VVC bitstream.

Alternatively, an access unit can also be composed of several NAL units as represented in Fig. 5. Fig. 5 shows a block diagram of an example of one access unit made of 3 NAL units.

This is for instance the case when a coded picture is coded in different slices or when there are multiple layers each encoding a different coded pictures in those different NAL units. Those are merely two examples and there may be many other cases resulting in an access units being composed of multiple NAL units.

The point here is that an access unit is implied by the parsing of the NAL units but does not constitute a data unit of the bitstream.

### Based on Open Bitstream Unit (OBU) in AV1

In a similar fashion as for NALU, the AV1 specification [2] defines an AV1 bitstream as a sequence of OBUs. An OBU is specified below (OBU syntax) and represented in Fig. 4.

In essence, it is very similar to the NAL unit concept: An OBU header has an obu_type to determine the type of the current OBU.

As opposed to a NAL unit, an OBU can contain its size which is signalled in the field called obu_size. The presence of the obu_size field is conditioned to the Boolean syntax obu_has_size_field in the header.

### OBU syntax

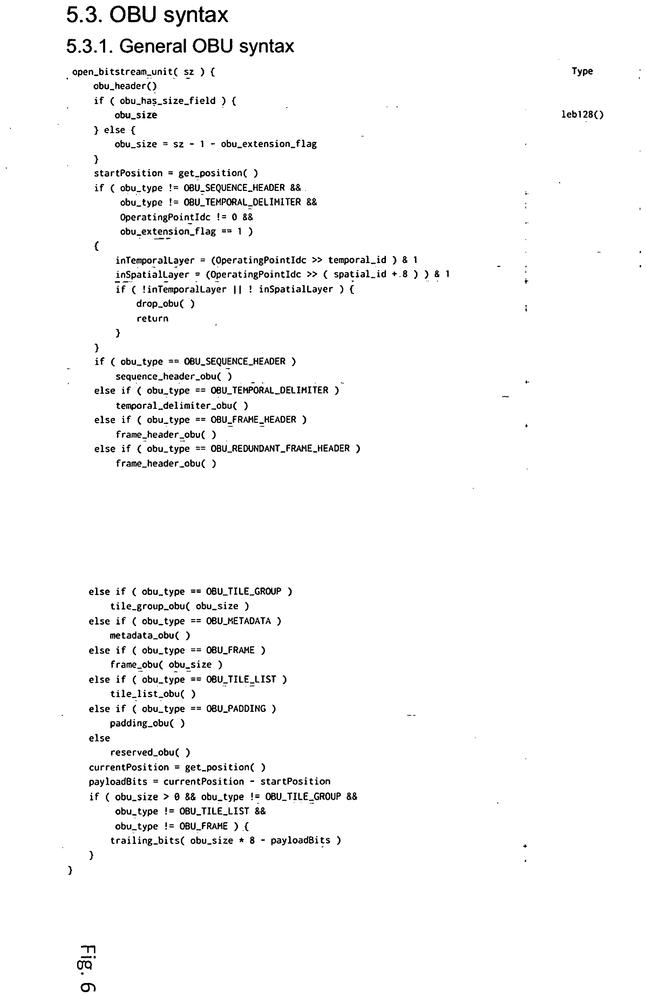

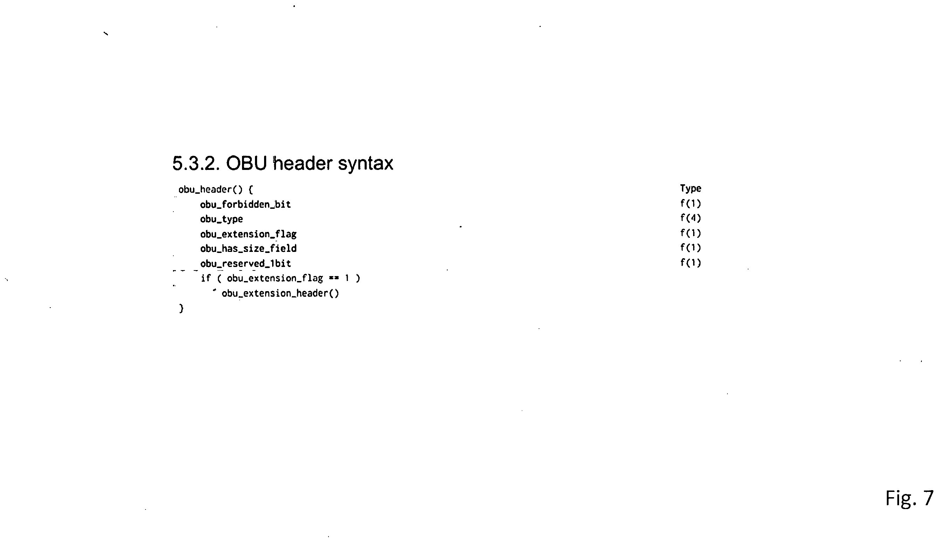

Fig. 6 shows a OBU syntax in AV1. The first element of an OBU is the OBU header which is defined in clause and represented in Fig. 7. Fig. 7 shows a OBU header syntax in AV1.

### Byte stream format of video bitstreams

In general, video bitstream can be typically found in two forms. In the first one, the bitstream is composed of a sequence of bits representing a sequence of data units. In the case of NAL-based video coding, the bitstream is thus a sequence of NAL units. In the second form, the bitstream is made parsable by inserting information in-between the data units.

NAL-based video bitstreams and OBU-based bitstreams have different approaches for this and are explained in the following sections.

### Based on Network Abstraction Layer Unit (NALU) in AVC, HEVC, EVC, VVC

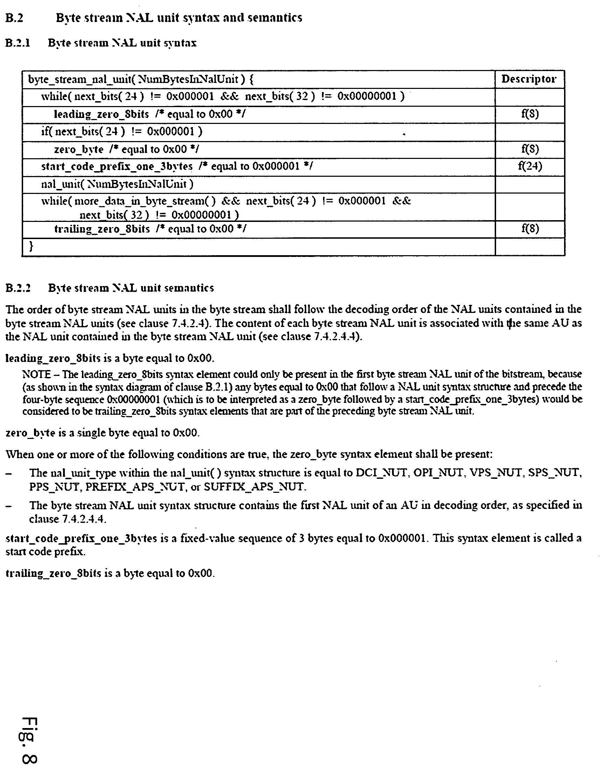

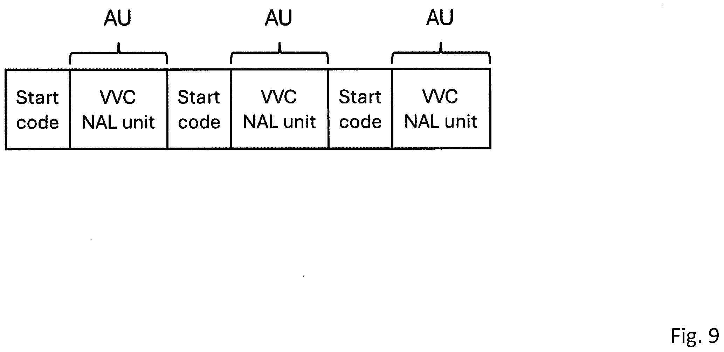

In NAL-based video coding standards, they typically define the so-called byte stream format which are defined in the Annex B of each standard. In VVC / H.266, the byte stream format is defined in Annex B and captured in Fig. 8 and especially Fig. 9. Fig. 8 shows a byte stream format in VVC Annex B. This byte stream format can be illustrated as in Fig. 9.

Fig. 9 shows a block diagram of an example VVC bitstream as byte stream format with three access units. In this example, each access unit is made of one NAL unit and as defined by the byte stream format, each NAL unit is prefixed by a start code.

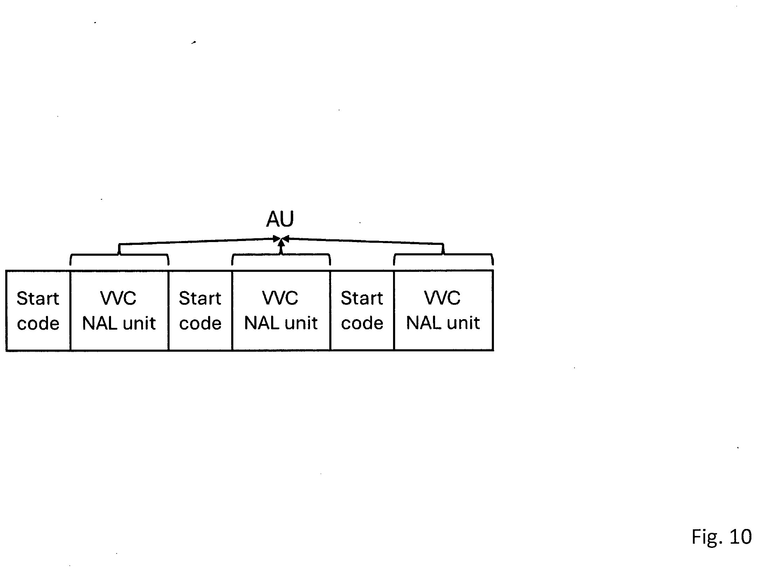

Another example could be that several NAL units belong to the same access unit Fig. 10. Fig. 10 shows a block diagram of an example VVC bitstream as byte stream format with one access unit.

### Based on Open Bitstream Unit (OBU) in AV1

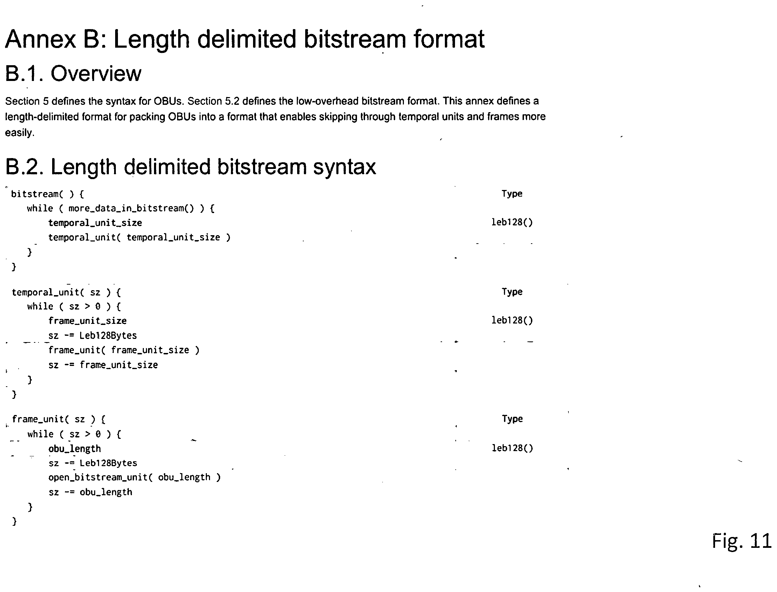

In AV1, the bitstream may be formatted as length-delimited sequence as captured in Fig. 11. Fig. 11 illustrates an AV1 length delimited bitstream format [2].

### Prior art

The prior art for this invention will be the VVC standard. However, any NAL-based video coding standard and other video coding standards such as AV1 may have the same deficiencies. The prior art may have some disadvantages which will be discussed below.

With a byte stream format as defined by the VVC coding standard (and other NAL-based standards and other like AV1), the following deficiencies are observed:
- Each NAL unit requires a start code prefix in the byte stream format.
- The start code prefix length is 3 bytes which when many NAL units of small size are present accounts for a significant number of bytes per second, causing bitrate overhead.
- Several NAL unit types are effectively belonging to the same category, e.g. slice, and the detailed type is meaningless for the storage/transport layer. Just the category type would be sufficient to process the video data.
- The start and end of coded picture is implicit at the highest level of the bitstream and must be derived by parsing the NAL unit type and/or by parsing further in the NAL unit payload. The same holds for the start and end of an access unit.

There is thus a need to reduce the bitrate overhead of parsable bitstream format as well as to simplify the signalled NAL unit types exposed to the storage and transport processes.

### Detailed description of the invention

Embodiments of the present invention will be discussed below.

An embodiment may have a bitstream generator for aggregating video data units, the bitstream generator comprising:
- an interface for obtaining a plurality of video data units;
- a processor for determining at least a subset of the plurality of video data units; the subset comprising at least two video data units; and
- wherein the processor is configured to aggregate the subset to obtain an aggregating video data unit.

Another embodiment may have a bitstream parser for obtaining video data units, the bitstream parser comprising:
- an interface for obtaining a video data unit, e.g. comprised by a video bitstream;
- a processor for determining if the video data unit comprises an aggregating video data unit; and
- wherein the processor is configured to extract a subset of the plurality of video data units from the aggregating video data unit.

### Application scenarios

The above discussed embodiments are applicable to different scenarios:

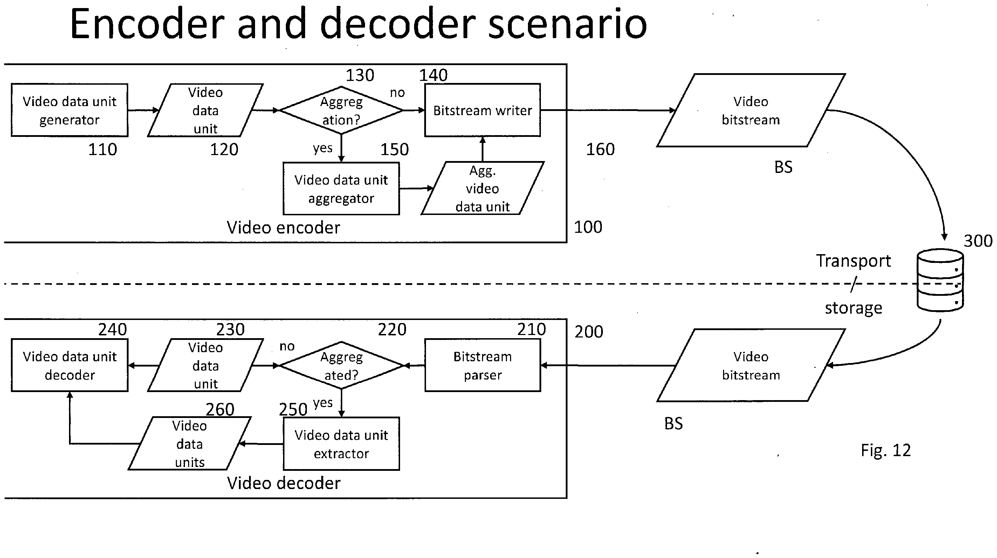

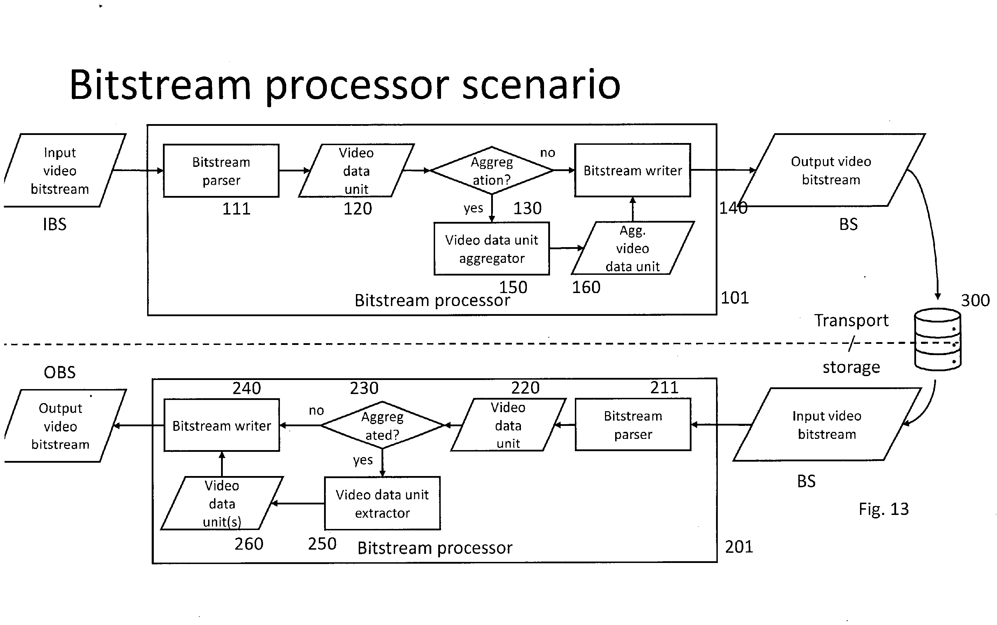

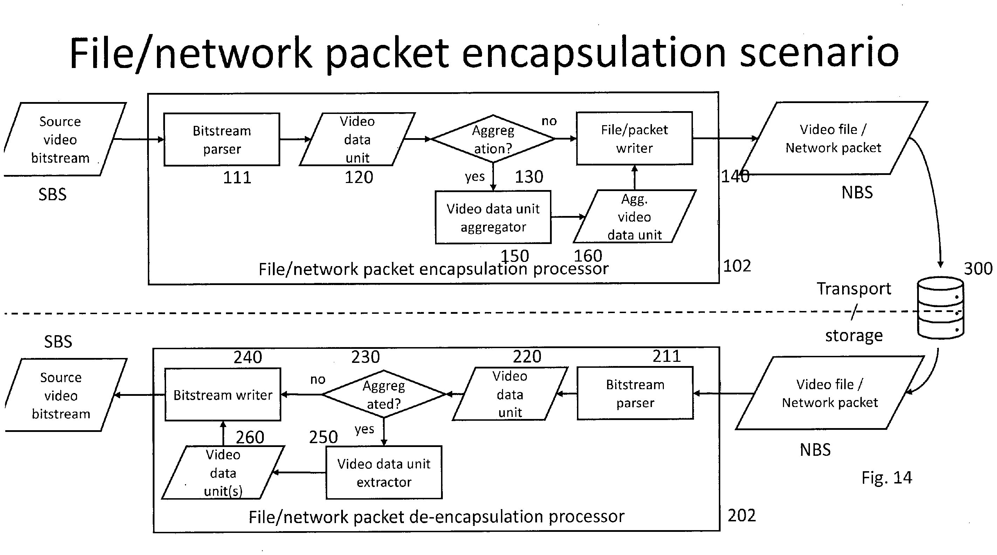

According to an embodiment the above discussed principle may be applied to an encoder/decoder scenario. The encoder/decoder scenario is shown by Fig. 12, wherein a bitstream processor scenario shown by Fig. 13 and a file/network pack encapsulation scenario by Fig. 14. Fig. 12 shows an encoder 100 and a decoder 200. The encoder outputs a video bitstream BS to be transported or stored in a storage entity 300. From this transport/storage entity 300 the bitstream BS can be provided to the decoder 200.

The encoder 100 comprises the video data unit generator 110 providing the video data unit 120 and a decision entity 130. The entity 130 determines whether an aggregation is required or possible or performed. In case no aggregation is done, the entity 130 forwards the data to the bitstream writer 140. In case an aggregation should be done, this is done by the video data aggregator 150. The aggregated video data is provided as aggregated video data unit 160 to the bitstream writer 140.

On the decoder side the bitstream parser 210 receives the bitstream BS, wherein a decision entity 220 determines, whether the bitstream BS comprises aggregated video data units. In case no aggregated video data units are present, the data are provided as the video data unit 230 and further to the video data decoder 240. In case, aggregated video data units are present, the data are forwarded to the extractor 250 which extracts the video data so as output the video data units 260. The video data units 260 are provided to the video data unit decoder 240.

Fig. 13 shows a bitstream, processor 101 which comprises the elements 111, 120, 130, 140, 150 and 160. The bitstream processor 101 receives the input video bitstream IBS and outputs the output video bitstream BS. Same is transported and stored by the entity 300. The bitstream processor 201 receives the input video bitstream BS from the entity 300 and processes same so as to obtain the output video bitstream OBS. Analogously to the entity 101, the entity 201 comprises the entities 211, 220, 230, 240, 250 and 260.

Fig. 14 shows a block diagram of a file network packet encapsulation processor 102 and the file network packet de-encapsulation processor 202.

102 comprises the entities 111, 120, 130, 140, 150 and 160, wherein 202 comprises the entities 211, 220, 230, 240, 250, and 260.

Then entity 102 is configured to receive the source video bitstream SBS so as to output based on same, the video file/network packet NBS. Same is stored/transported using the entity 300. The video file/network packet NBS is then de-encapsulated by the entity 202 so as to output the source video bitstream SBS.

It should be noted that 101 and 102 substantially complies with regard to the functionality to the video encoder 101, wherein the bitstream parser 111 and 211 just processes the bitstream without encoding and decoding.

An embodiment may have an encoder comprising bitstream generator.

Another embodiment may have a decoder comprising bitstream.

Below, embodiments of the present invention will be discussed in the context of NAL units to be used as video data units. Furthermore, optional dependent aspects will be discussed.

The key idea of the invention is to aggregate several NAL units into an aggregating NAL unit. This way, only one start code is used for delimiting several NAL units for start code-delimited byte stream format, hence reducing the bitrate overhead of the generated bitstream while still allowing the parsing of all the NAL units, aggregated and non aggregated.

According to embodiments, different type of aggregation strategies can give additional benefits, e.g.:
- Aggregating all the NAL units belonging to the same coded picture
- Aggregating all the NAL units representing parameters sets
- Aggregating all the NAL units belonging to the same access units (e.g. all the coded pictures of the different coding layers)

According to embodiments, grouping all the NAL units belong to the same coded picture simplifies the detection of the start and end of coded pictures in the bitstream.

More generally - according to embodiments -, having a different grouping type for those categories and signaling it in the aggregating NAL unit hides the complexity of the video coded bitstream to the transport and storage layer and only exposing what matters for the transport and storage.

Also, since video coding standards may according to embodiments introduce new NAL units type that legacy bitstream parsers would not know, those new types may be rendered opaque to the transport and storage layer by adding them into an aggregating NAL unit type.

### Technical description of the solution

### General

The following properties are important to note about the invention:
The aggregated NAL units may be consecutive in bitstream order so that it is still a valid sequence of video data unit.

An embodiment provides the aggregation process being reversible:
- The original video data units are bit-identically reconstructed from the aggregating video data units.
- A bitstream can be transformed with aggregating video data units and bit-identically reconstructed to its original form after extraction of the aggregated video data units

### Steps

An embodiment provides an encoding unit generating a video bitstream performs the following steps:
- Obtaining one or more video data units to be aggregated together.
- Determining the aggregation type.
- Generating the aggregating video data unit corresponding to the determined aggregation type.
- Writing the one or more obtained video data units into the aggregating video data unit.

Optionally - according to embodiments - after:
A) Replacing the one or more obtained video data in video bitstream by the aggregating video data unit.
   OR
B) Writing the aggregating video data unit into the video bitstream.
   OR
C) Writing the aggregating video data unit into the video file container or network packet.

According to embodiments, option A) may be performed when the encoding unit is transforming an existing video bitstream into a modified video bitstream wherein some of the video data units have been aggregated.

According to embodiments, option B) may be performed when the encoding unit is a video encoder generating a video bitstream which is the result of the encoding of an uncompressed video sequence.

According to embodiments, option C) may be performed when the encoding unit is part of an encapsulation process either to create a video file (e.g. ISOMBFF based file) or a video data packet (e.g. RTP packet). This could be seen as the combination of option A followed by a conventional encapsulation step. But the point here is that it can be implemented by a different type of process, i.e. an encapsulation process.

In a first case, a video encoder producing the video bitstream would implement those steps. In another case, a bitstream processor would parse each video data unit, one by one, and aggregate the video data units when relevant. In this last case, those steps are performed outside a video encoder and there may be any period of time between the encoding of the video and the steps above.

In case the processing entity does not perform an encoding, but an aggregating, the entity may be referred to as bitstream generator.

An embodiment provides a decoding unit parsing a video bitstream performs the following steps:
- Obtaining a video data unit.
- Determining if the video data unit is an aggregating video data unit.
- Extracting the one or more aggregated video data units from the aggregating video data units.

Optionally - according to embodiments - after:
A) Replacing in the video bitstream the aggregating video data unit by the extracted one or more aggregated video data units.
   OR
B) Passing the extracted one or more aggregated video data units to the video decoded input buffer

NOTE "parsing a video bitstream" may be done with a standalone bitstream, e.g. a sequence of video data units or video data units formatted according to a byte stream format such as in the Annex B of the family of NAL-based of video coding standards, or with a bitstream in one of its encapsulated forms (encapsulated bitstream), e.g. in a video packet or in a track containing the encapsulated bitstream in a media file; thus, the video data units may be located in a standalone stream or file, in a media file (e.g. ISOMBFF based file) or in a video packet (e.g. RTP packet).

In a first case, a video decoder parsing the video bitstream would implement those steps plus option B. In another case, a bitstream processor would parse each video data unit, one by one, and extract the video data units from the aggregating video data units. In this last case, those steps, plus option A, are performed outside a video decoder and there may be any period of time between the decoding of the video and the steps above.

Note, when the processor does not perform decoding but de-aggregating, instead of a decoding unit a bitstream parser (as more generic entity) may be used according to embodiments.

### Logic

### General

This clause presents the different logics from the consumption side of the invention for each application scenario context.

### Decoder logic

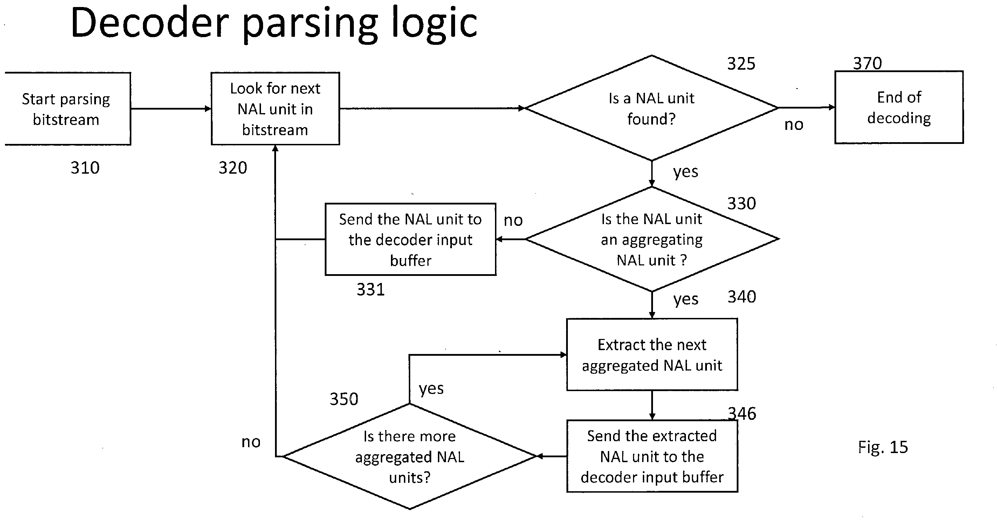

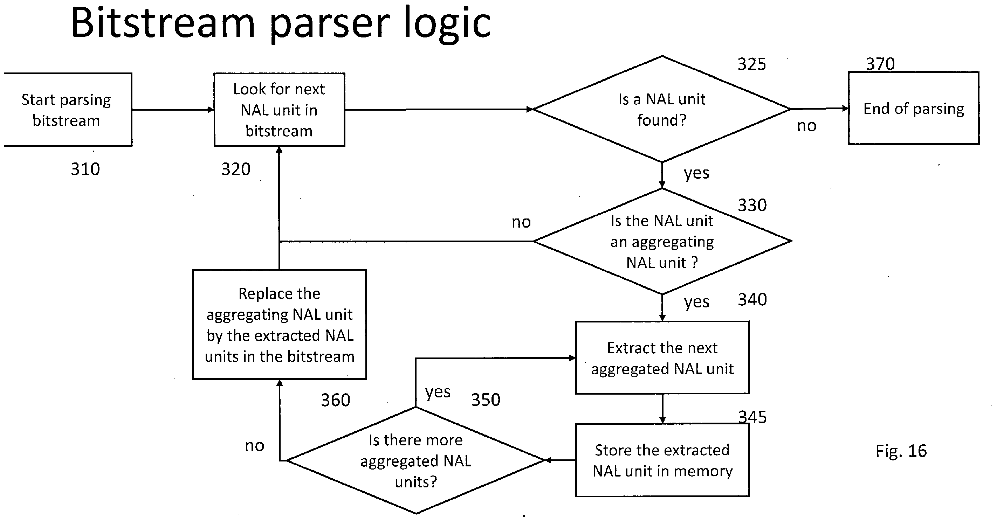

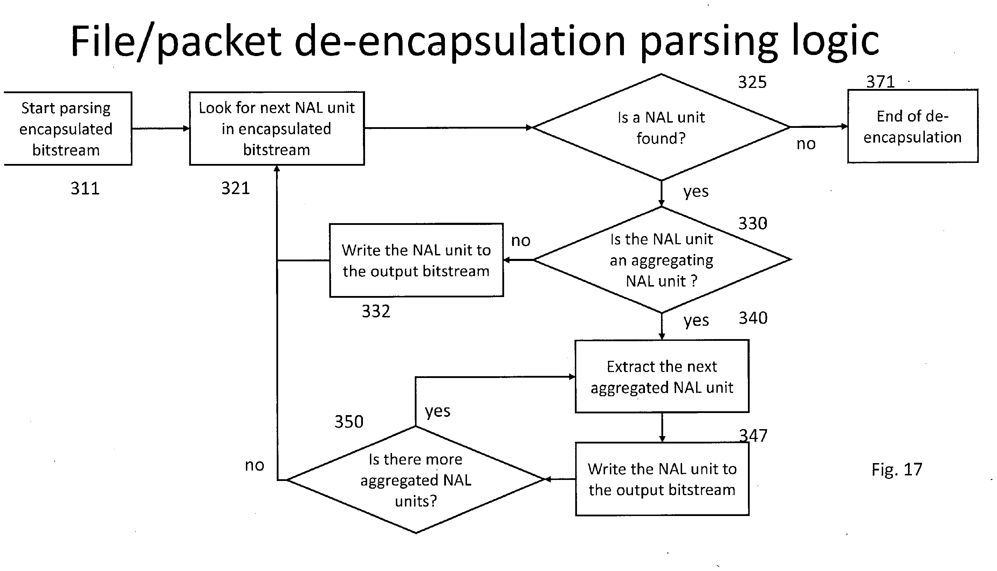

The decoder logic will be discussed with respect to Fig. 15, wherein Fig. 16 shows a bitstream parcel logic and Fig. 17 a file/packet de-encapsulation passing logic.

In all three logics, a determination of a video data unit is done (cf. step 325, is a NAL unit found?) and a determination whether the video data unit is aggregated (cf. step 330, is the NAL unit an aggregating NAL unit?) is done. The step 330 is executed depending on the result of the steps 325. Depending on the step 330, the extraction in the step 340 is done. The step 340 is also present in all discussed logics.

The bitstream parser logic (cf. Fig. 16 for bitstream parser logic) starts with a bitstream BS which is obtained in step 310, wherein the next NAL unit or video data unit in the bitstream is taken in the step 320 before performing the decision 325. The NAL video data unit is found and the parsing is ended in step 317. In case a video data unit is found, the steps 330 and 340 are performed, wherein 340 is just performed when an aggregated video data unit is present. This is done extracted in step 340 and stored in step 345. The extraction is performed as long as there is no more aggregated video data units which is determined in the step 350. As long as there are more aggregated video data units, the step 340 is repeated as illustrated by the feedback loop. When all aggregated video data units are extracted in the step 360, the aggregated NAL units can be replaced by the extracted NAL units in the bitstream.

The decoder logic as illustrated by Fig. 15 is quite comparable, wherein just the steps 345 and 360 are slightly amended. Instead of the step 345, the step 346 is used. Here, the extracted video data unit is sent to the decoder input buffer after extracting. This is also done in the step 331 when there are no aggregated video data units determined.

The file/packet de-encapsulation parsing logic discussed in the context of Fig. 17 is comparable to the decoder parsing logic of fig. 16. It comprises the steps 325, 330, 340 and 350. The de-encapsulation process is embedded in the process comprising the main steps 311 of start parsing encapsulated bitstream, 321 of looking for the next video data unit in encapsulated bitstreams before the step 325 for determining whether a video data unit is found. If no video data unit is found, the step 371 of end of de-encapsulation is done. Instead of the step 346, a step 347 of writing the NAL unit to the output bitstream is performed. Instead of the step 331, a step 332 of writing of the video data unit to the output bitstream is performed.

Below embodiments will be discussed.

### Based on Network Abstraction Layer Unit (NALU) in AVC, HEVC, EVC, VVC

### Syntax for aggregated NAL units

The concept of storing several NAL units into a single one requires to define how this storage is defined in terms of binary syntax. There may be different approaches with different trade-offs regarding bitrate overhead and parsing complexity.

The following section presents 3 alternative ways to perform the aggregation.

In those examples a new NAL unit type 28 compared with the existing ones in VVC is used. The existence of this value for now is assumed. The different approaches to define this new value are discussed below.

In the various syntax, the length of syntax elements we introduce for implementing the invention are merely examples and other choices can be made, e.g. fixed length vs variable length and which length if fixed. Those are optimisation orthogonal to the invention.

In the syntax, we sometimes use the rbsp_trailing_bits() function defined in VVC and other standards. The point of the function is to realign the bit position to the start of a byte, hence the name of byte alignment. This is to make the parsing of the binary structure easier but they are not essential to the syntax and they are thus optional when implementing the invention.

### Alternative 1: Byte concatenation of NAL units

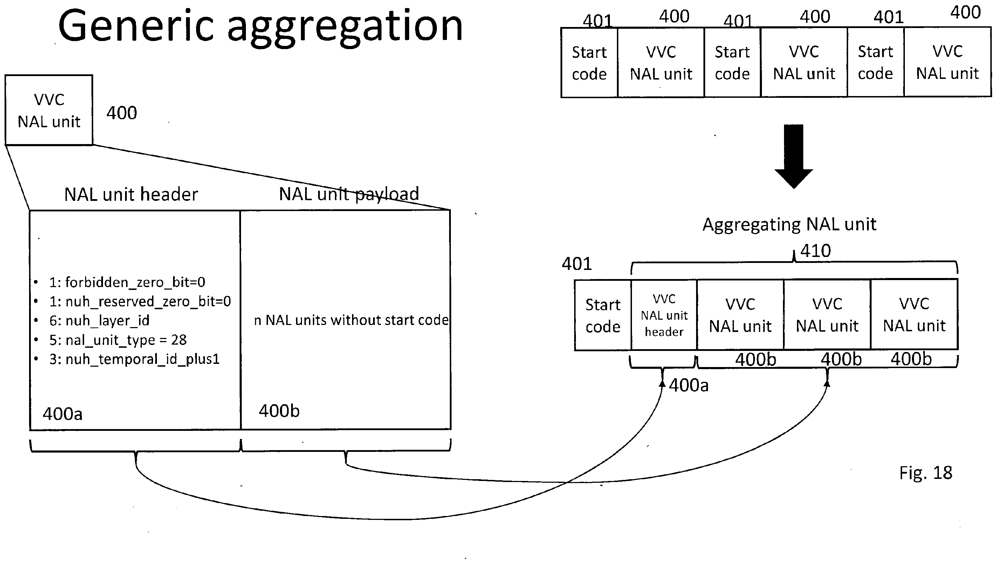

In this embodiment or variant, the aggregated NAL units are merely concatenated to constitute the payload of the aggregating NAL unit. Note that the full NAL units are concatenated, i.e. header and payload, and according to the present invention, there is no start code in front of each aggregated NAL units. This is shown by Fig. 18. Fig. shows a VVC aggregatingNAL unit 400 (general aggregated video data unit 410) including a header 400a and a payload 400b corresponding to the aggregated other VVC NAL units 400 (general video data units 400). Each video data units 400 may comprise a start code 401, wherein the aggregated video data unit 410 may just comprise one start code 401, one header 400a and one payload 400b made of the aggregated units 400. Fig. 4 shows a byte concatenation of aggregated NAL units.

Below table 1 represents the syntax of the payload of such aggregating NAL unit.

**Table 1 - Syntax of aggregating NAL unit by byte concatenation**

| | |
|---|---|
| aggregating_nal_unit_rbsp(NumBytesInRbsp) { | **Descriptor** |
| while(more_data_in_payload()) { | |
| nal_unit() | |
| } | |
| } | |

As defined in the table, the parsing logic may according to embodiments be the following:
- While there is data left in the payload, the parser attempts to parse a new NAL unit,
- more_data_in_payload() is a function defined in the VVC specification but extended here to be used in this NAL unit (beyond SEI and VUI payload as currently defined). If the total number of bytes consumed by reading the nal_unit() elements is not yet equal to NumBytesInRbsp, then the function returns TRUE. Otherwise, FALSE.

The advantage of such variant is that there is no overhead since it is just the NAL units. The main disadvantage of this technique is that the parsing of NAL unit payload as defined like that becomes dependent on the size of NAL unit payload while it is currently not the case.

More importantly, the length of the aggregated NAL unit cannot be inferred before starting the parsing of nal_unit() syntax element and thus the parsing of the aggregated NAL unit needs to be done syntax element by syntax element in order to determine the end of the NAL unit. Consequently, the parsing of each NAL unit as a whole and then parsing of each NAL unit payload as enabled currently by the VVC standard is here no longer possible.

For the reasons above, this variant yet simple may not be the most appropriate.

### Alternative 2: Byte offset of NAL unit starts

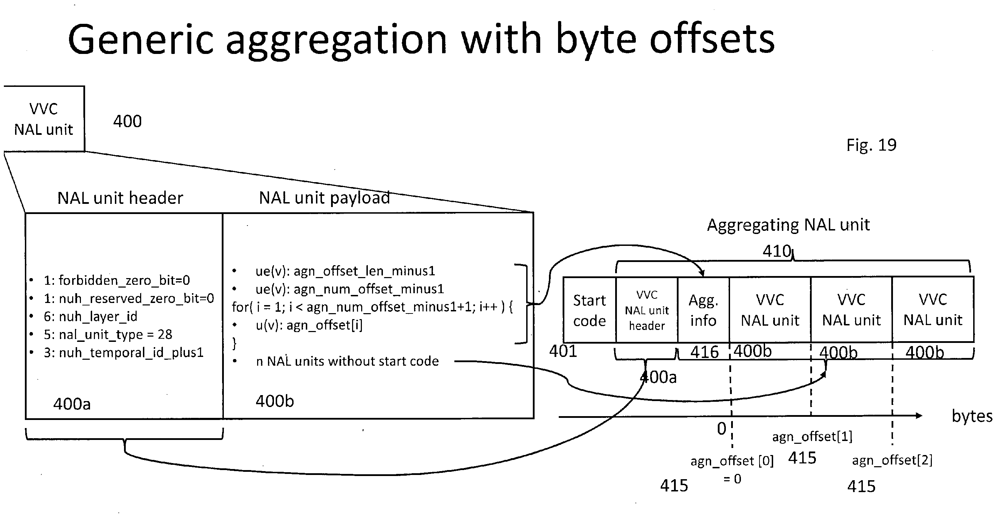

In this embodiment or variant, the aggregating NAL unit payload provides information about the byte offsets at which an aggregated NAL unit starts in the aggregating NAL unit payload as depicted in Fig. 19. Fig. 19 shows a generic aggregation with byte offsets. Here same refence numbers are used for header 400a, the payload 400b and the aggregating unit 410. The offsets are marked by 415. The information on the offsets is included in 416.

We assume that for each aggregated NAL unit contained in the payload, there is a byte offset element. This way, the number of byte offsets signalled is equal to the number of aggregated NAL units minus one (the first byte offset being equal to 0, it is not signalled).

Table 2 represents the syntax of the payload of such aggregating NAL unit.

**Table 2 - Syntax of aggregating NAL unit with byte offset**

| | |
|---|---|
| aggregating_nal_unit_rbsp(NumBytesInRbsp) { | **Descriptor** |
| **agn_offset_len_minus1** | ue(v) |
| **agn_num_offset_minus1** | ue(v) |
| for(i=1; i < agn_num_offset_minus1+1; i++ ) { | |
| **agn_offset[i]** | u(v) |
| } | |
| rbsp_trailing_bits() | |
| for(i=0; i < agn_num_offset_minus1+1; i++ ) { | |
| NumBytesInNalUnit = compute_nal_unit_size(i, agn_offset[i], agn_num_offset_minus1) | |
| nal_unit(NumBytesInNalUnit) | |
| } | |
| } | |

The semantic of the syntax elements can according to embodiments be defined as follows:
- agn_offset_len_minus1 plus 1 specifies the length, in bits, of the agn_offset [ i ] syntax elements.
- agn_num_offset_minus1 plus 1 specifies the number of NAL unit byte offsets contained in the payload.
- agn_offset[ i ] specifies the i-th byte offset, and is represented by agn_offset_len_minus1 plus 1 bits. The first byte of the first NAL unit in the payload data is considered byte 0, i.e. agn_offset [0] is always equal to 0.

As defined in this table, the parsing logic is the following: The aggregation information gives the number of byte offsets and thus the number of NAL units to be parsed.

The function compute_nal_unit_size() calculates the size in bytes of the i-th NAL unit. One can calculate this information by computing the difference between two byte offsets or for the last aggregated NAL unit, by computing the difference between the total number of bytes of the aggregating NAL unit minus the number of bytes left to parse in this the aggregating NAL unit.

Note that we introduce rbsp_trailing_bits() before the NAL units such that the first NAL unit will start at byte-aligned position and the subsequent NAL units too since nal_unit() is an integer number of bytes.

The advantage of this signalling is that the parsing process may access each NAL unit individually knowing the start of position of the NAL unit given by the byte offset. However, the length of the last NAL unit is still implied as the remaining bytes of the NAL unit which would require the parsing of this payload to be aware of its own size. For even more parsing simplicity the alternative 3 can be considered.

### Alternative 3: Length-prefix NAL unit

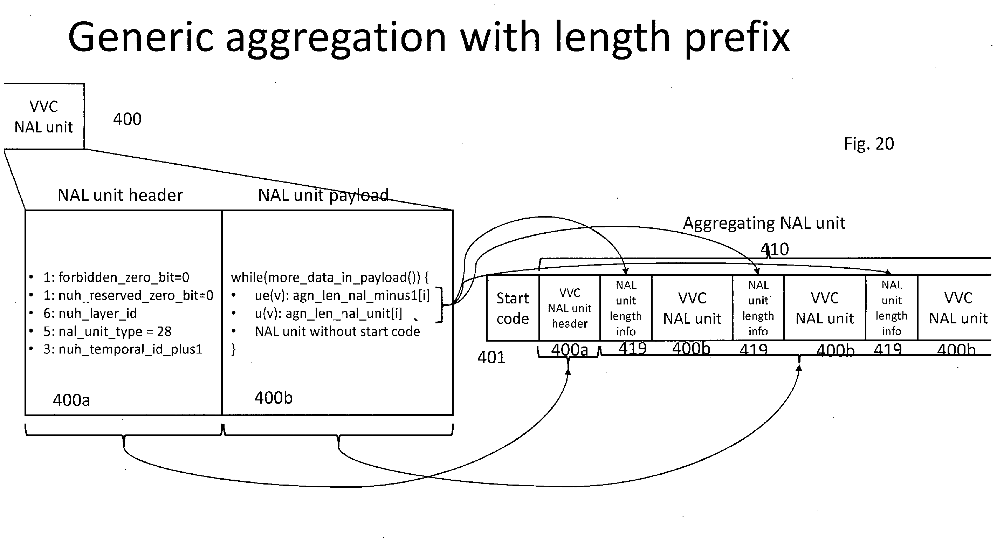

Fig. 20 illustrates generic aggregation with length-prefixed NAL units. Here same refence numbers are used for header 400a, payload 400b and the aggregating unit 410. The length info filed (between the payloads 400b) are marked by 419.

Table 3 represents the syntax of the payload of such aggregating NAL unit.

**Table 3 - Syntax of aggregating NAL unit with byte offset**

| | |
|---|---|
| aggregating_nal_unit_rbsp(NumBytesInRbsp) { | **Descriptor** |
| i = 0 | |
| while(more_data in_payload()) { | |
| **agn_len_nal_minus1**[i] | ue(v) |
| **agn_len_nal_unit**[i] | u(v) |
| rbsp_trailing_bits() | |
| nal_unit(agn_len_nal_unit[i]) | |
| i++ | |
| } | |
| } | |

The semantic of the syntax elements can be defined as follows:
- agn_len_nal_minus1 plus 1 specifies the length, in bits, of the agn_len_nal_unit [i] syntax elements.
- agn_len_nal_unit [i] specifies the length of the NAL unit in bytes contained in the payload.

As defined this table, the parsing logic is the following:
- The length before each NAL unit allows to use the existing nal_unit parsing convention as defined in VVC, i.e. the nal_unit() function is called with the number of bytes of the NAL unit to parse.
- The more_data_in_payload() function here is also used in order to determine when to stop parsing for another aggregated NAL unit.

Note that we introduce rbsp_trailing_bits() before the NAL unit such that the NAL unit will start at a byte-aligned position and the entire while loop will constitute an integer number of bytes at every iteration.

Here, the advantage is that the conventional parsing function of nal_unit() can be used by signalling the length of the NAL unit explicitly before.

However, the disadvantage here remains that the detection of the last aggregated NAL unit to parse is still dependent on the function more_data_in_payload() which requires the parsing of the payload dependent on its own size. To alleviate this issue, the alternative 4 is given.

### Alternative 4: Explicit number of aggregated NAL units (with length-prefix NAL unit)

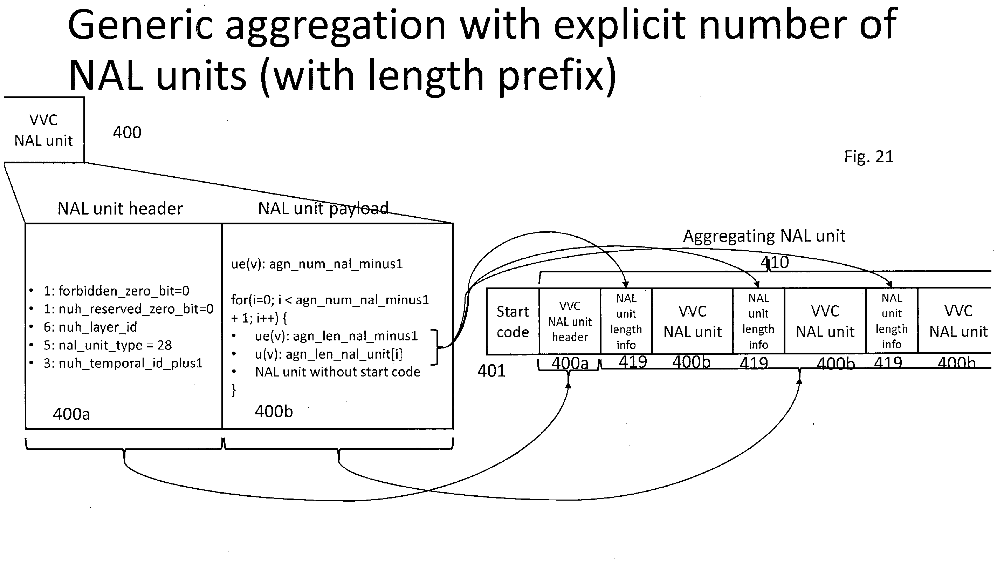

In this variant, the aggregating NAL unit payload provides the explicit number of aggregated NAL units in the aggregating NAL unit payload. This way the parsing of the NAL unit payload is made independent from the size of the payload which is inline with current definition of NAL unit payload parsing in VVC and various video coding standards. This is depicted in Fig. 21.

Fig. 21 illustrates generic aggregation with explicit number of aggregated NAL units. Here same refence numbers are used for header 400a, payload 400b and the aggregating unit 410. The length info filed (between the payloads 400b) are marked again by 419.

Table 4 represents the syntax of the payload of such aggregating NAL unit.

**Table 4 - Syntax of aggregating NAL unit with explicit number of NAL units**

| | |
|---|---|
| aggregating_nal_unit_rbsp(NumBytesInRbsp) { | **Descriptor** |
| **agn_num_nal_minus1** | ue(v) |
| rbsp_trailing_bits() | |
| for(i=0; i < agn_num_natminus1 + 1; i++) { | |
| **agn_len_nal_minus1**[i] | ue(v) |
| **agn_len_nal_unit**[i] | u(v) |
| rbsp_trailing_bits() | |
| nal_unit(agn_len_nal_unit[i]) | |
| i++ | |
| } | |
| } | |

The semantic of the syntax elements can be defined as follows:
- agn_num_nal_minus1 plus 1 specifies the number of NAL units that are aggreagate in the payload.
- agn_len_nal_minus1 plus 1 specifies the length, in bits, of the agn_len_nal_unit [ i ] syntax elements.
- agn_len_nal_unit [i] specifies the length of the NAL unit in bytes contained in the payload.

As defined in this table, the parsing logic is the following:
- The number of NAL units is explicitly given by the syntax element agn_num_nal_minus1 plus 1. This allows the parsing logic to configure the number of loops to execute when parsing the aggregated NAL units.
- The length before each NAL unit allows to use the existing nal_unit parsing convention as defined in VVC, i.e. the nal_unit() function is called with the number of bytes of the NAL unit to parse.

Note that we introduce rbsp_trailing_bits() before the foor loop so that each loop starts at a byte-aligned position.

This variant has all the advantages combined. I allows to reuse the conventional nal_unit() syntax based on the knowledge of the length of NAL unit before parsing. In addition, a parser may access each NAL unit individually by calculating the start position in bytes of each NAL units based on its NAL unit length signalled and skipping bytes corresponding to the NAL units (nal_unit() syntax element). This for instance allows a parser to access quickly the NAL unit headers of the aggregated NAL units and determine the type of those NAL units without the need to parse their payload.

One disadvantage for this syntax is however the writing of some more bytes to signal that information.

Nevertheless, this appears to represent the preferred variant which combines parser simplicity and low bitrate overhead.

### Aggregation of NAL unit types

### General

In a simple case, only NAL units of the same type can be aggregated together. However, this is rather restrictive as NAL unit types rarely repeats each other consecutively in a video bitstream.

As a result, it is desirable that different types of NAL units can be aggregated together.

In this clause, we are going to examine the different approaches in term of NAL unit types that can be aggregated together and not. This can have advantages and disadvantages when it comes to the usage of the aggregating NAL unit by transport and storage layer. This is the reason why, several approaches are here described.

### Generic aggregating NAL unit type

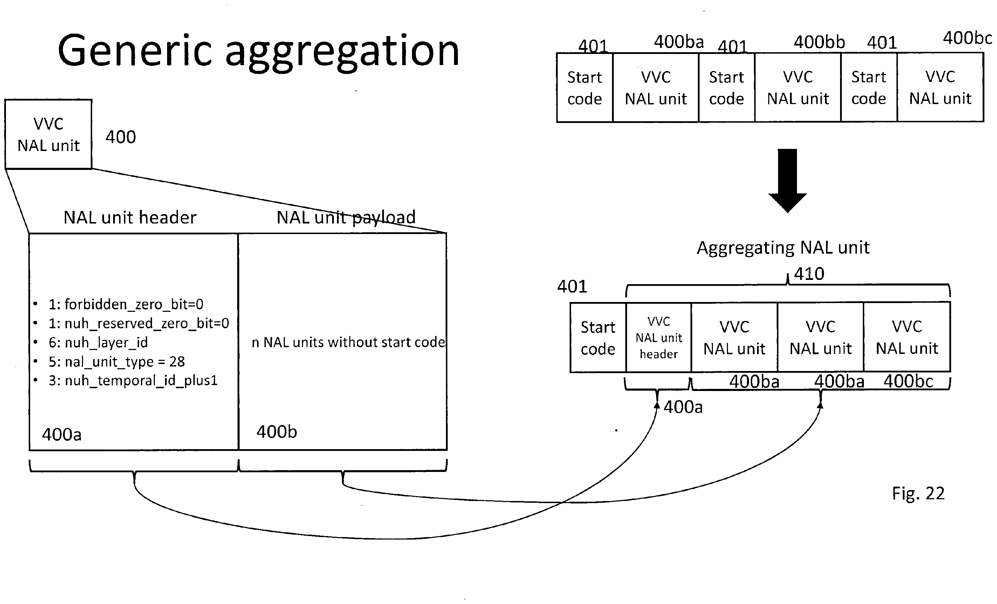

In this embodiment, probably the simplest one, the NAL units of any types are sequentially aggregated into an aggregating NAL unit as illustrated in Fig. 22.

Fig. 22 illustrates generic aggregation. Here the already used reference numbers are used for header 400a, payload 400b and the aggregated unit 410. Here, the different units 400ba, 400bb and 400bc are written in 410.

To this end, the VVC standard can be modified as follows:
1) Creating a new NAL unit type for the aggregation NAL unit
2) Defining the payload syntax of this new NAL unit type (here we choose the unused value 28).

Regarding point 2), we explain how to do this in chapter Based on Network Abstraction Layer Unit (NALU) in AVC, HEVC, EVC, VVC - Syntax for aggregated NAL units (cf. [0099]).

Regarding point 1), the following VVC table is modified to illustrate the new value.

**Table 5 - NAL unit type codes and NAL unit type classes**

| **nal_unit_ty pe** | **Name of nal_unit_type** | **Content of NAL unit and RBSP syntax structure** | **NAL unit type class** |
|---|---|---|---|
| 0 | TRAIL_NUT | Coded slice of a trailing picture or subpicture* | VCL |
| | | slice_layer_rbsp( ) | |
| ... | | | |
| 26 | RSV_NVCL_26 | Reserved non-VCL NAL unit types | non-VCL |
| 27 | RSV_NVCL_27 | | |
| 28 | AGG_NUT | Aggregating NAL unit types aggregating_nal_unit_rbsp() | N/A |
| 29..31 | UNSPEC_29.. UNSPEC_31 | Unspecified non-VCL NAL unit types | non-VCL |
| * indicates a property of a picture when pps mixed nalu_types in_pic flag is equal to 0 and a property of the subpicture when pps_mixed nalu_types in_pic_flag is equal to 1. | | | |

Because this variant does not differentiate between NAL unit types, the aggregating NAL unit is thus not a VCL nor a non-VCL NAL units. I can be either or even both at the same time.

### VCL and non-VCL aggregating NAL unit type

To improve upon the last variant, one can differentiate the aggregation per VCL or non-VCL class as follows:

**Table 6 - NAL unit type codes and NAL unit type classes**

| **nal_unit_ty pe** | **Name of nal unit_type** | **Content of NAL unit and RBSP syntax structure** | **NAL unit type class** |
|---|---|---|---|
| 0 | TRAIL_NUT | Coded slice of a trailing picture or subpicture* | VCL |
| | | slice_layer_rbsp() | |
| ... | | | |
| 4 | AGG_VCL_NUT | Aggregating NAL unit types for VCL NAL units aggregating_nal_unit_rbsp( ) | VCL |
| 5..6 | RSV_VCL_4.. | Reserved non-IRAP VCL NAL unit types | VCL |

| **nal_unit_ty pe,** | **Name of nal_unit_type** | **Content of NAL unit and RBSP syntax structure** | **NAL unit type class** |
|---|---|---|---|
| | RSV_VCL_6 | | |
| ... | | | |
| 26 | RSV_NVCL_26 | Reserved non-VCL NAL unit types | non-VCL |
| 27 | RSV_NVCL_27 | | |
| 28 | AGG_NVCL_NUT | Aggregating NAL unit types for non-VCL NAL units aggregating_nal_unit_rbsp() | non-VCL |
| 29..31 | UNSPEC_29.. UNSPEC_31 | Unspecified non-VCL NAL unit types | non-VCL |
| * indicates a property of a picture when pps mixed_nalu_types in_pic_flag is equal to 0 and a property of the subpicture when pps_mixed nalu_types in_pic flag is equal to 1. | | | |

In this embodiment or variant, we have two code points for NAL unit aggregation: one for VCL and one for non-VCL. Even though we have two code points, the same payload syntax if used.

With this variant, a parser would have more understanding before parsing about the types of NAL units that are contained.

However, there can be in some cases the need to aggregate a non-VCL NAL unit with a VCL NAL unit, e.g. a picture header NAL unit with the coded picture it is associated with.

### Categorised aggregating NAL unit type

In this embodiment or variant, we further define the aggregation NAL unit type to aggregating a certain set of NAL unit types. This can thus define a category of NAL units that can be aggregated together.

For example, a VVC coded video sequence (and previous NAL-based video coding standards and any video coding schemes) typically have information descriptive of coding parameters using to encode the video sequence. In VVC (and NAL-based video coding standards), those are typically called parameter sets. VVC defines:
- Video parameter set
- Sequence parameter set
- Picture parameter set
- Adaptation parameter set

One way to define the aggregation NAL unit type is thus for instance to create a category parameter set.

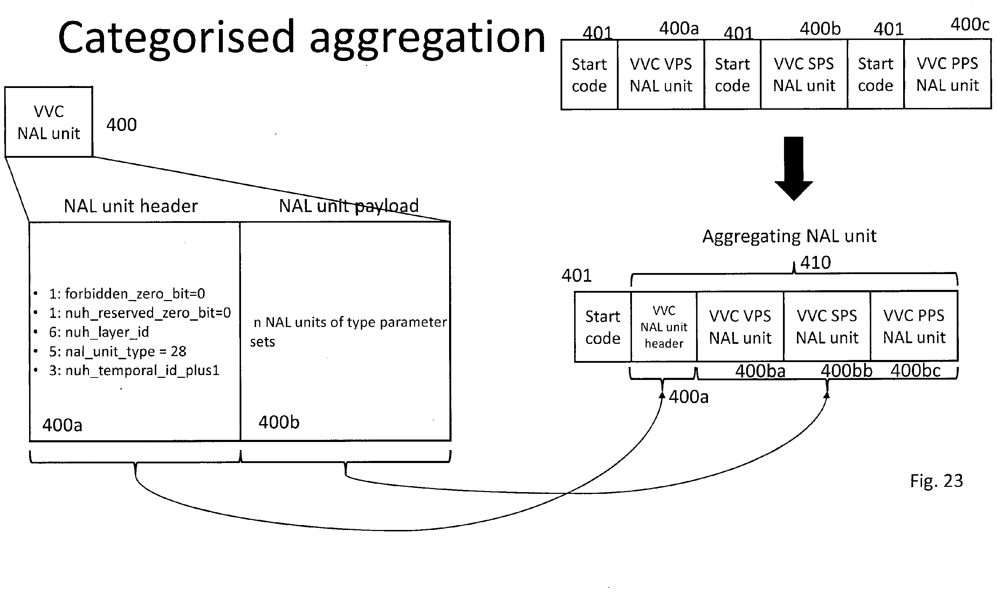

Fig. 23 illustrates categorised aggregation. Here the already used reference numbers are used for header 400a, payload 400b and the aggregating unit 410. Here, the different units 400ba, 400bb and 400bc are written in 410, wherein 400ba is a VPS NAL unit, 400bb is a SPS NAL unit and 400bc is a PPS NAL unit.

**Table 7 - NAL unit type codes and NAL unit type classes**

| **nal_unit_ty pe** | **Name of nal unit_type** | **Content of NAL unit and RBSP syntax structure** | **NAL unit type class** |
|---|---|---|---|
| 0 | TRAIL_NUT | Coded slice of a trailing picture or subpicture* | VCL |
| | | slice_layer_rbsp() | |
| ... | | | |
| 26 | RSV_NVCL_26 | Reserved non-VCL NAL unit types | non-VCL |
| 27 | RSV_NVCL_27 | | |
| 28 | AGP_NUT | Aggregating NAL unit types of parameter set category aggregating_nal_unit_rbsp() | non-VCL |
| 29..31 | UNSPEC_29.. UNSPEC_31 | Unspecified non-VCL NAL unit types | non-VCL |
| * Indicate a property of a picture when pps mixed nalu_types_in_pic_flag is equal to 0 and a property of the subpicture when pps_mixed nalu_types in_pic flag is equal to 1. | | | |

In this way, the NAL unit type is known to be non-VCL but also to only contain NAL units whose type is one of the parameter set types.

Since parameter sets are typically transported and stored together when transmitting over a network or stored into a file, this can advantageously be combined into a single data structure to be handled by those processes.

### Coded picture-based aggregating NAL unit type

In this variant, the aggregation is performed onto all the NAL units that correspond to a single coded picture. Indeed, a coded picture can be encoded in smaller portions, typically called slices, which slices are then each encapsulated into its own NAL unit. As a result, a single coded picture may be composed of several NAL units.

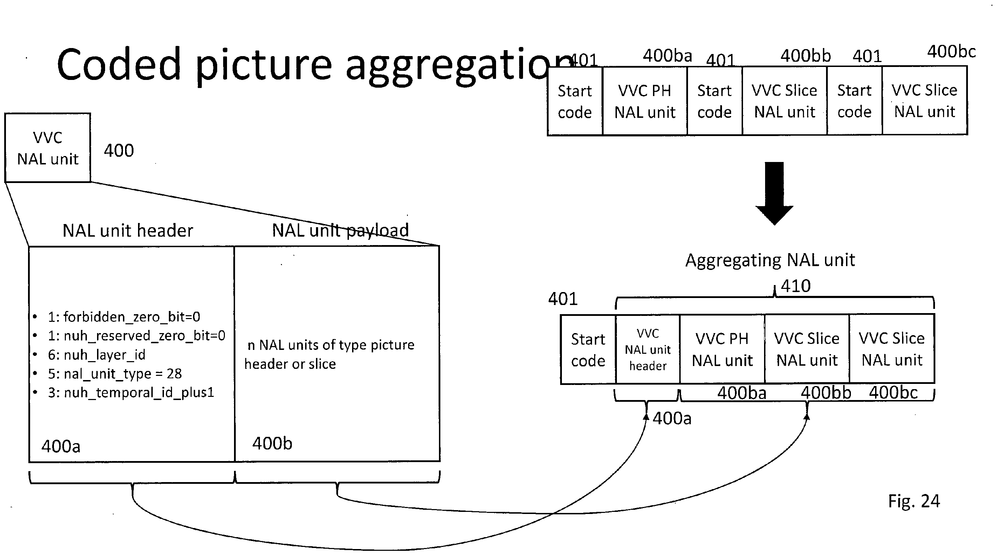

Therefore, a bitstream parser can only detect implicitly the start and end of coded picture by parsing each NAL unit and check specific syntax elements which indicate that. Advantageously, the aggregation can be declared to be containing the NAL units of a single coded picture, hence making explicit from the bitstream structure the delimitation of coded pictures as illustrated in fig. 24.

Fig. 24 illustrates coded picture-based aggregation. Here, the already used reference numbers are used for header 400a, payload 400b and the aggregating unit 410. Here, the different slices 400ba, 400bb and 400bc are written in 410, wherein 400ba is a PH NAL unit, 400bb and 400bc are VVC Slices of NAL unit.

**Table 8 - NAL unit type codes and NAL unit type classes**

| **nal_unit_ty pe** | **Name of nal_unit_type** | **Content of NAL unit and RBSP syntax structure** | **NAL unit type class** |
|---|---|---|---|
| 0 | TRAIL_NUT | Coded slice of a trailing picture or subpicture* | VCL |
| | | slice_layer_rbsp() | |
| ... | | | |
| 26 | RSV_NVCL_26 | Reserved non-VCL NAL unit types | non-VCL |
| 27 | RSV_NVCL_27 | | |
| 28 | ACP_NUT | Aggregating NAL unit types of a single coded picture aggregating_nal_unit_rbsp() | N/A |
| 29..31 | UNSPEC_29.. UNSPEC_31 | Unspecified non-VCL NAL unit types | non-VCL |
| * indicates a property of a picture when pps mixed_nalu types_in_pic flag is equal to 0 and a property of the subpicture when pps_mixed nalu_types_in_pic flag is equal to 1. | | | |

As illustrated above, the new code point can be declared to be the aggregation of NAL units of a coded picture. Here in the context of VVC, this could correspond to NAL unit types of slice category and picture header.

### Access unit aggregating NAL unit type

Yet another variant is to aggregate at a logical level higher which is the access unit. As reminder, the VVC specification defines the access unit as:
3.2 access unit (AU): A set of PUs that belong to different layers and contain coded pictures associated with the same time for output from the DPB.

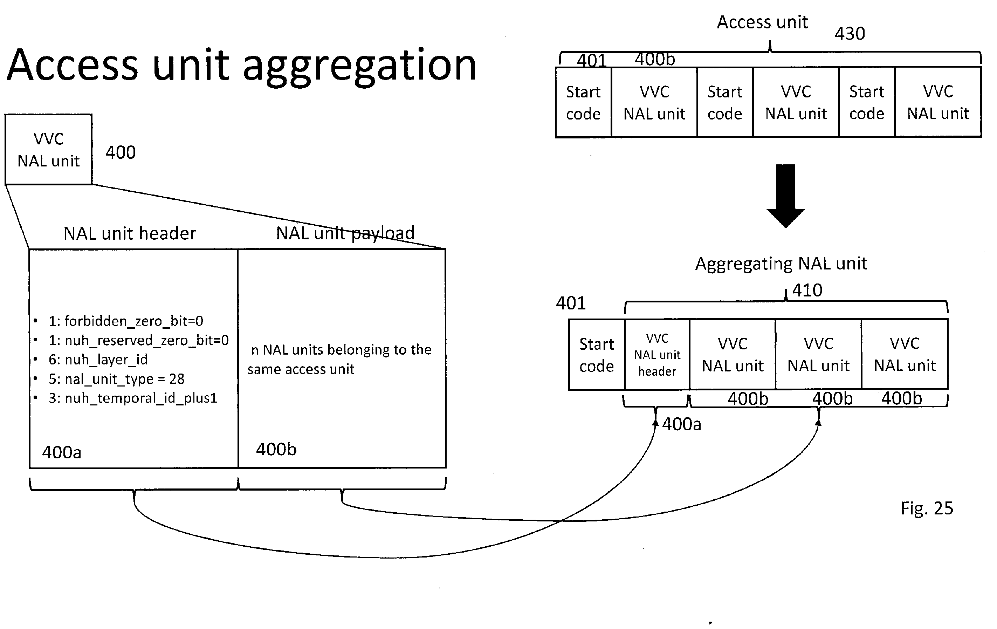

Like the coded picture variant, here the aggregation would indicate that the NAL units belonging to a single access unit are contained in the aggregating NAL unit. This is represented in Fig. 25.

Fig. 25 illustrates access unit aggregation. Here the already used reference numbers are used for header 400a, payload 400b and the aggregated unit 410. The VVC NAL units 400b of the access unit 430 to be aggregate are shown before and after aggregation.

**Table 9 - NAL unit type codes and NAL unit type classes**

| **nal_unit_ty pe** | **Name of nal_unit_type** | **Content of NAL unit and RBSP syntax structure** | **NAL unit type class** |
|---|---|---|---|
| 0 | TRAIL_NUT | Coded slice of a trailing picture or subpicture* slice_layer_rbsp() | VCL |
| ... | | | |
| 26 | RSV_NVCL_26 | Reserved non-VCL NAL unit types | non-VCL |
| 27 | RSV_NVCL_27 | | |
| 28 | ACP_NUT | Aggregating NAL unit types of a single access unit aggregating_nal_unit_rbsp() | N/A |
| 29..31 | UNSPEC_29.. UNSPEC_31 | Unspecified non-VCL NAL unit types | non-VCL |
| * indicates a property of a picture when pps_mixed_nalu_types_in_pic_flag is equal to 0 and a property of the subpicture when pps_mixed_nalu_types in_pic_flag is equal to 1. | | | |

Since access unit are key concept interfacing video coded bitstream and the layer of transport and storage, this would be advantageous to have the explicit delimitation of access unit from the video bitstream. Hence, a file writer or a network packager would not have to deduce the start and end of access units in the video bitstream but detect the start and end of this NAL unit in the bitstream. For completeness, note that there exists a NAL unit type called AU delimiter in VVC and previous standards which is an NAL unit delimiting the boundaries of access units. However, this NAL unit does not contain the NAL unit of the access unit themselves which means that all the listed deficiencies of the prior art are still applicable even when AU delimiters are used

### Size reduction of the aggregated NAL unit

### General

In those embodiment, further optimisation of the invention are presented. They pertain to reducing the bitrate overhead due to the aggregation.

### Reduced header of aggregated NAL units

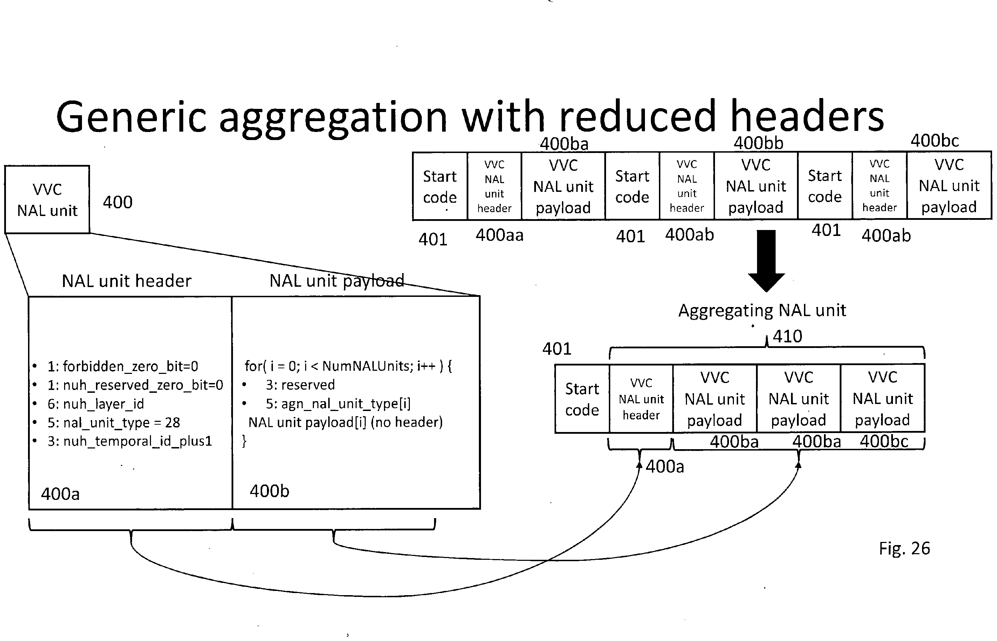

In a first variant, an aggregating NAL unit may aggregate several NAL units whose NAL unit header are almost identical but only the NAL unit types differ. In this case, one can reduce the total size of the aggregating NAL unit by not repeating the identical element of the NAL unit header of each NAL unit. This is depicted in fig. 26.

Fig. 26 illustrates aggregation by use of a reduced header. Here the already used reference numbers are used for header 400a, payload 400b and the aggregating unit 410. Here, the different payloads 400ba, 400bb and 400bc are written in 410, wherein the headers 400aa, 400ab and 400ac are combined to the header 400a.

Note that for the following syntax we are going to use as basis the preferred variant of section Based on Network Abstraction Layer Unit (NALU) in AVC, HEVC, EVC, VVC Syntax for aggregated NAL units.

The syntax of such variant would be as follows:

| | |
|---|---|
| aggregating_nal_unit_rbsp(NumBytesInRbsp) { | **Descriptor** |
| **agn_num_nal_minus1** | ue(v) |
| rbsp_trailing_bits() | |
| for(i=0; i < agn_num_natminus1 + 1; i++) { | |
| **agn_len_nal_minus1**[i] | ue(v) |
| **agn_len_nal_unit**[i] | u (v) |
| **agn_nal_unit_type**[i] | u(5) |
| rbsp_trailing_bits() | |
| nal_unit_payload(agn_len_nal_unit[i]) | |
| i++ | |
| } | |
| } | |

Here this is key thing in the syntax is that the NAL unit header is not fully written but only the NAL unit type element which is followed by the NAL unit payload and not full NAL unit as in previous examples.

### Optionally reduced header of aggregated NAL units

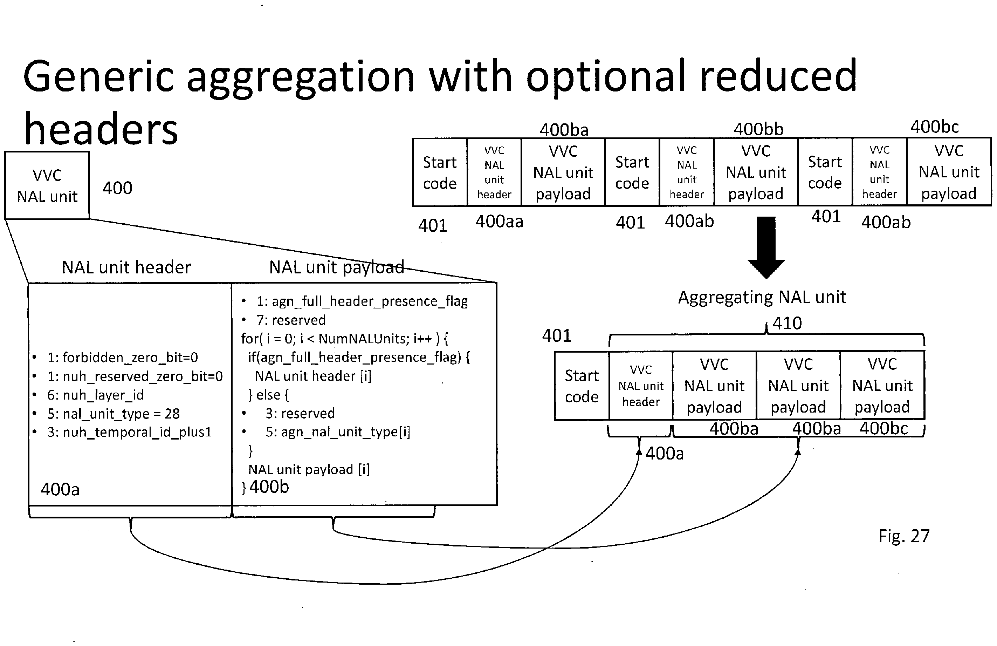

To bring more flexibility, there can be that some of the aggregated NAL units require their full header. In this case, one can make the presence of the full header conditioned to a signalled fag as illustrated in Fig. 27.

Fig. 27 illustrates aggregation by use of an optionally reduced header of aggregated NAL units. Here the already used reference numbers are used for header 400a, payload 400b and the aggregating unit 410. Here, the different payloads 400ba, 400bb and 400bc are written in 410, wherein the headers 400aa, 400ab and 400ac are combined to the header 400a.

For brevity's sake, the full syntax is not given but can be deduced from the previous variant.

### Omitted header based on NALU type value

In yet a further embodiment, the presence of full or reduced header can be attached to the NAL unit type of aggregating NAL unit.

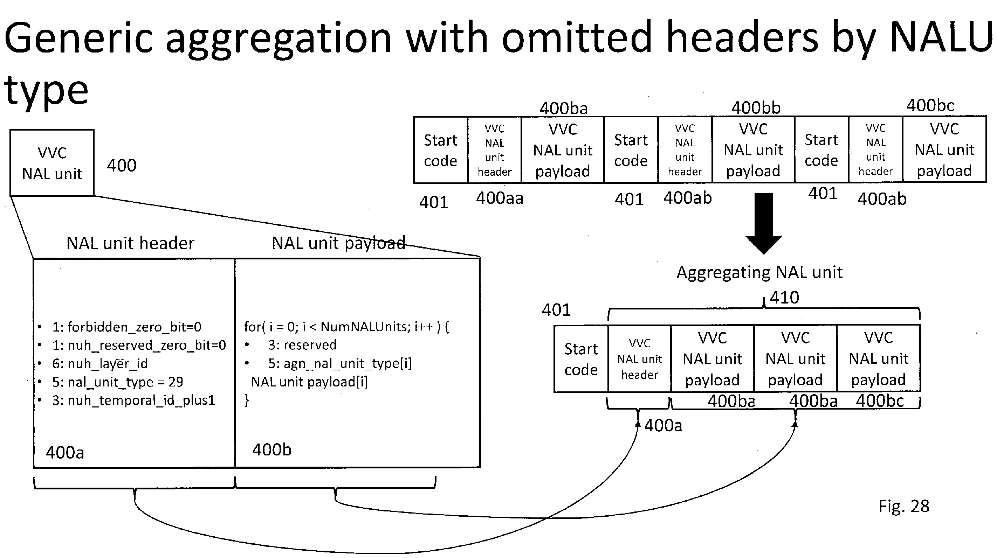

Fig. 28 illustrates generic aggregation with omitted headers by NALU type. Here the already used reference numbers are used for header 400a, payload 400b and the aggregating unit 410. Here, the different payloads 400ba, 400bb and 400bc are written in 410, wherein the headers 400ab and 400ac are omitted for 410.

This way, no further information needs to be signalled for the parsing of the payload.

**Table 10 - NAL unit type codes and NAL unit type classes**

| **nal_unit_ty pe** | **Name of nal unit_type** | **Content of NAL unit and RBSP syntax structure** | **NAL unit type class** |
|---|---|---|---|
| 0 | TRAIL_NUT | Coded slice of a trailing picture or subpicture* slice_layer_rbsp() | VCL |
| ... | | | |
| 26 | RSV_NVCL_26 | Reserved non-VCL NAL unit types | non-VCL |
| 27 | RSV_NVCL_27 | | |
| 28 | AGP_NUT | Aggregating NAL unit types with full header aggregating_nal_unit_full_header_rbsp() | N/A |
| 29 | AGP_NUT | Aggregating NAL unit types with reduced header aggregating nal unit_ reduced_header_rbsp() | N/A |
| 30..31 | UNSPEC_29.. | Unspecified non-VCL NAL unit types | non-VCL |
| | UNSPEC_31 | | |
| * indicates a property of a picture when pps_mixed_nalu_types in_pic_flag is equal to 0 and a property of the subpicture when pps_mixed nalu_types in_pic flag is equal to 1. | | | |

### Aggregation across spatial and temporal layer

### General

In the simple form, the aggregation only takes place within the same spatial layer and/or within the same temporal layer. This way, the information about the spatial layer and the temporal layer (i.e. nuh_layer_id and nuh_temporal_id_plus1 for VVC NAL units) is identical for all the aggregated NAL units and thus the information in the aggregating NAL unit represents the information in all the aggregated NAL units. This is useful for transport and storage layer to be able to rely on this information without the need to parse deeper in each NAL unit headers contained in the aggregating NAL unit.

In a more advanced form, the aggregation may be achieved across spatial and temporal layer. To this end, further measures need to be taken or may be taken:
Alternative 1 (according to one embodiment): The NAL unit header of the aggregating NAL unit does not contain layer information
Alternative 2 (according to one embodiment): The NAL unit header of the aggregating NAL unit does contain layer information, but they are representing min or max values
Alternative 3 (according to one embodiment): The NAL unit header of the aggregating NAL unit does contain layer information, but they are meaningless

Alternative 1 would modify the NAL unit header syntax and therefore can only be introduced in a new version of VVC while also not providing backward compatibility with previous version. As a result, this variant may be better fitting a new video coding standard.

Alternative 2 would modify the interpretation of the values of the header and give some indication about the respective layer information of the aggregated NAL unit.

Alternative 3 would also modify the interpretation of the values of the header but would not give any further information.

Both alternatives 2 and 3 would be backward compatible. Alternative 2 would in addition give some information to the parser and seems to be preferred variant to allow cross-layer aggregation.

### Aggregation across units

Aggregation across access units would be possible but would require extracting the aggregated NAL units in the possible aggregating NAL unit in order to determine the access unit boundaries. As a result, it seems an acceptable limitation to stop the aggregation at access unit boundaries to strike balance between start code reduction and parsing complexity of the video bitstream.

### Avoiding double emulation prevention process

In VVC, the function declaring the syntax of any NAL unit is defined as follows:

### 7.3.1.1 General NAL unit syntax

| | |
|---|---|
| nal_unit( NumBytesInNalUnit) { | **Descriptor** |
| nal_unit_header( ) | |
| NumBytesInRbsp = 0 | |
| for( i = 2; i < NumBytesInNalUnit; i++ ) | |
| if( i + 2 < NumBytesInNalUnit && next_bits( 24) = = 0x000003 ) { | |
| **rbsp_byte**[ NumBytesInRbsp++ ] | b(8) |
| **rbsp_byte**[ NumBytesInRbsp++ ] | b(8) |
| i += 2 | |
| **emulation_prevention_three_byte** /* equal to 0x03 */ | f(8) |
| } else | |
| **rbsp_byte**[ NumBytesInRbsp++ ] | b(8) |
| } | |

As specified in this syntax, a process of removing an emulation prevention byte takes places which removes from the NAL unit payload the third byte in the three-byte sequence 0x000003 when it appears at a byte-aligned position. This byte was introduced by the bitstream generator to avoid the occurrence of an unwanted start code inside the NAL unit payload.

When aggregating NAL units inside the payload of the aggregating NAL unit, it is desirable to not execute again the emulation prevention on the aggregated NAL units.

For this reason, one may adapt all the above embodiments of this invention such that the emulation prevention only takes place when the payload of the aggregating NAL unit is generated and not for each aggregated NAL unit.

Avoiding double emulation prevention save parsing/writing cycles and few bytes corresponding to the added 0x03 added a second time.

### Based on Open Bitstream Unit (OBU) in AV1

All the embodiments above were given in the context of VVC. However, all of them may be implemented in the context of another video codec such as AV1 wherein an OBU corresponds to a NAL unit.

Below, different embodiments will be discussed referring to the general concept:
A 1^{st} embodiment provides a method for aggregating video data units, the method comprising:
   - obtaining a plurality of video data units;
   - determining at least a subset of the plurality of video data units; the subset comprising at least two video data units; and
   - aggregating the subset to obtain an aggregating video data unit.
A 2^{nd} embodiment provides the method according to 1^{st} embodiment, wherein the aggregating video data unit is formatted as a new video data unit.
A 3^{rd} embodiment provides the method according to the first or second embodiment, further comprising writing the aggregating video data unit into a binary data structure to obtain a written aggregating video data unit. For example, this data structure would be determined by the syntax of the standard.
A 4^{th} embodiment provides the method according to one of the 1^{st} to 3^{rd} embodiments, further comprising writing the aggregating video data unit into a video bitstream.
A 5^{th} embodiment provides the method according to the 1^{st} to 4^{th} embodiments, further comprising writing the aggregating video data unit into a video file container or network packet.
A 6^{th} embodiment provides the method according to one of the 1^{st} to 5^{th} embodiments, further comprising adding only one start code for the aggregating video data unit which corresponds to the subset.
A 7^{th} embodiment provides the method according to one of the 1^{st} to 6^{th} embodiments, further comprising adding one combined header (header having reduced size) for the aggregating video data unit and/or the subset.
An 8^{th} embodiment provides the method according to one of the 1^{st} to 7^{th} embodiments, wherein aggregating comprises replacing the video data units of the subset by the aggregating video data unit in a video bitstream.
A 9^{th} embodiment provides the method according to one of the 1^{st} to 8^{th} embodiments, wherein aggregating is performed as long as there are one or more video data units to be aggregated; or
   wherein aggregating is performed as long as there are one or more video data units to be aggregated. For example, a function (e.g. more data in_payload()) is extended to indicated one or more video data units are to be aggregated.
A 10^{th} embodiment provides the method according to one of the 1^{st} to 9^{th} embodiments, wherein determining the at least a subset is performed in accordance to the aggregation type.
An 11th embodiment provides the method according to one of the 1^{st} to 10^{th} embodiments, wherein determining the at least a subset is performed so that video data units of the subset belong to a same logical group.
A 12th embodiment provides the method according to one of the 11th embodiment, wherein the logical group comprises video data units of the subset belonging to a same coded picture (e.g. single coded picture or slices of a single coded picture) and/or comprising slices of a single coded picture.
A 13th embodiment provides the method according to one of the 11th embodiment, wherein the logical group comprises video data units of the subset belonging to parameters sets (e.g. video parameter set, sequence parameter set, picture parameter set, adaptation parameter set, ...).
A 14^{th} embodiment provides the method according to the 11th embodiment, wherein the logical group comprises video data units of the subset belonging to a same access unit.
A 15^{th} embodiment provides the method according to one of the 1^{st} to 14^{th} embodiments, wherein determining the at least a subset is performed so that video data units of the subset belonging to same unit type or grouping type (e.g. NAL type) or same category (e.g. correspond to a single coded picture) are determined to be aggregated.
A 16^{th} embodiment provides the method according to one of the 1^{st} to 15^{th} embodiments, wherein determining the at least a subset is performed so that video data units of the subset consecutive in bitstream order are determined to be aggregated.
A 17^{th} embodiment provides the method according to one of the 1^{st} to 16^{th} embodiments, wherein determining the at least a subset is performed so that aggregation only takes place within the same spatial layer and/or within the same temporal layer.
An 18^{th} embodiment provides the method according to one of the 1^{st} to 17^{th} embodiments, wherein determining the at least a subset is performed so that aggregation is achieved across spatial and temporal layer; or wherein determining the at least a subset is performed so that aggregation is achieved across spatial and temporal layer and wherein a or does not contain layer information or contains layer information representing min or max values or contains layer information without taking same into account.
A 19^{th} embodiment provides the method according to one of the 1^{st} to 18^{th} embodiments, further comprising adapting an information in a header (especially the field "more_data_in_payload") to indicate the amount of video data units aggregated in the aggregated video data unit.
A 20^{th} embodiment provides the method according to one of the 1^{st} to 19^{th} embodiments, further comprising adapting or adding an information in aggregating video data unit, especially an offset, to indicate one or more starting positions of the aggregated video data units in the aggregating video unit.
A 21^{st} embodiment provides the method according to the 20^{th} embodiment, wherein the information is added as aggregation information following a header and/or at a beginning to the payload.
A 22^{nd} embodiment provides the method according to one of the 1^{st} to 21^{st} embodiments, further comprising adapting or adding one or more length information in an aggregating video data unit, especially a length, to indicate the size in bytes of the aggregated video data units in the aggregating video data unit.
A 23^{rd} embodiment provides the method according to one of the 1^{st} to 22^{nd} embodiments, further comprising adapting or adding an information in the aggregating video data unit, especially on a number of video data units, to indicate the amount of video data units aggregated in the aggregating video data unit.
A 24^{th} embodiment provides the method according to the 23^{rd} embodiment, wherein the information is added as length or number information following the header and/or at the beginning to the payload.
A 25^{th} embodiment provides the method according to one of the 1^{st} to 24^{th} embodiments, further comprising assigning to the aggregating video data unit a video data unit type indicative of containing aggregated video data units, e.g. of different type or different classes (e.g. VCL and non-VCL aggregating NAL unit type).
A 26^{th} embodiment provides the method according to the 25^{th} embodiment, wherein the aggregating video data unit type is present in the header (e.g. AGG_NUT, unused field) and is indicative of class information (VCL class or non-VCL class)..
A 27^{th} embodiment provides the method according to one of the 25^{th} or 26^{th} embodiment, wherein a category parameter (e.g. video parameter set, sequence parameter set, Picture parameter set, adaptation parameter set, ...) or a type information or category information (e.g. same unit type or grouping type or a same category) or a logical level information (e.g. access units) is present in the header.
A 28^{th} embodiment provides the method according to one of the 1^{st} to 27^{th} embodiments, wherein one header per aggregated video data unit is provided or one header comprising common information of the subset of the plurality of video data units per aggregating video data unit is provided.
A 29^{th} embodiment provides the method according to one of the 1^{st} to 28^{th} embodiments, wherein a fully written header comprising common information of the plurality of video data units is provided and/or a reduced header comprising individual information of the subset of the plurality of video data units is provided.
A 30^{th} embodiment may have a method for obtaining video data units, the method comprising:
   - obtaining a video data unit, e.g. comprised in a video bitstream;
   - determining if the video data unit comprises an aggregating video data unit;
   - extracting a subset of the plurality of video data units from the aggregating video data unit.
A 31^{st} embodiment may have the method according to the 30^{th} embodiment, further comprising replacing in the video bitstream the aggregating video data unit; or further comprising replacing in the video bitstream the aggregating video data unit consisting of a video data unit by the extracted plurality of video data units.
A 32^{nd} embodiment may have the method according to one of the 30^{th} to 31^{st} embodiments, wherein the video data are located in a video file, especially a bitstream (e.g. sequence of NALU, or byte stream, with start code in-between the NALus), or A media file (e.g. ISOBMFF), or a stream of video packets (e.g. RTP).
A 33^{rd} embodiment may have the method according to one of the 30^{th} to 32^{nd} embodiments, further comprising passing the extracted subset of video data units to a video decoding input buffer.
A 34^{th} embodiment may have the method according to one of the 30^{th} to 33^{rd} embodiments, further comprising forwarding the unextracted subset of video data units or the video data units to be extracted dependent on the step of determining.
A 35^{th} embodiment may have the method according to one of the 34^{th} embodiment, wherein forwarding is performed as long as there are one or more video data units aggregated in the aggregated video data unit.
A 36^{th} embodiment may have the method according to one of the 30^{th} to 35^{th} embodiments, wherein the video data units are Network Abstraction Layer Units (NALU).
A 37^{th} embodiment may have a computer readable storage medium having stored thereon a program code for performing the method according to one of the 1^{st} to 29^{th} embodiments or according to one of the 30^{th} to 36^{th} embodiments.
A 38^{th} embodiment may have a bitstream generator for aggregating video data units, the bitstream generator comprising:
   - an interface for obtaining a plurality of video data units;
   - a processor for determining at least a subset of the plurality of video data units; the subset comprising at least two video data units; and
   - wherein the processor is configured to aggregate the subset to obtain an aggregating video data unit.
A 39^{th} embodiment may have the bitstream generator according to the 38^{th} embodiment, wherein the processor is configured to write the aggregating video data unit into a video bitstream.
A 40^{th} embodiment may have an encoder comprising bitstream generator according to one of the 38^{th} or 39^{th} embodiment.
A 41^{st} embodiment may have a bitstream parser for obtaining video data units, the bitstream parser comprising:
   - an interface for obtaining a video data unit, e.g. comprised by a video bitstream;
   - a processor for determining if the video data unit comprises an aggregating video data unit; and
   - wherein the processor is configured to extract a subset of the plurality of video data units from the aggregating video data unit.
A 42^{nd} embodiment may have a decoder comprising bitstream parser according to the 41^{st} embodiment.

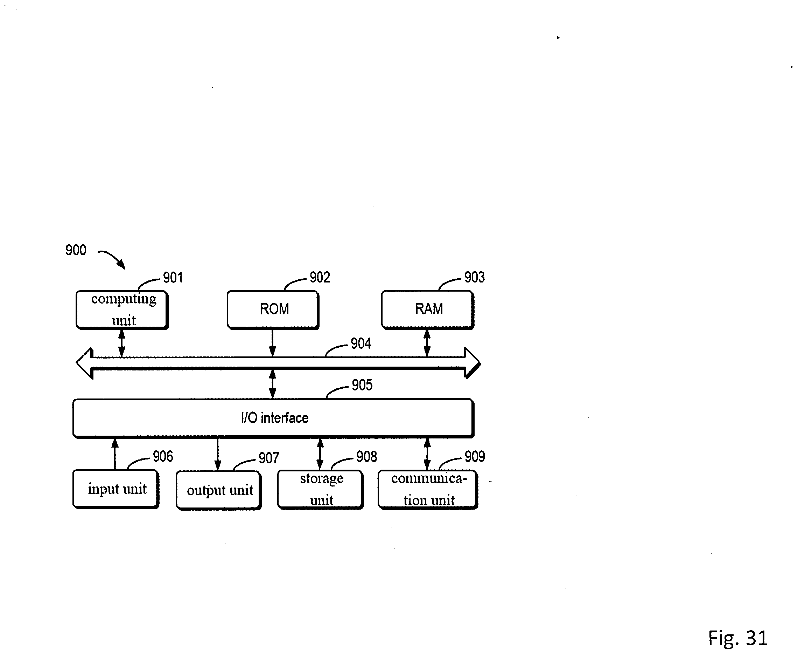

Fig. 31 is a block diagram illustrating an electronic device 900 according to embodiments of the present disclosure. The electronic device is intended to represent various forms of digital computers, such as a laptop, a desktop, a workstation, a personal digital assistant, a server, a blade server, a mainframe computer, and other suitable computers. The electronic device may also represent various forms of mobile devices, such as a personal digital processor, a cellular phone, a smart phone, a wearable device, and other similar computing devices. The components shown herein, their connections and relationships, and their functions are described as examples only, and are not intended to limit implementations of the present disclosure described and/or claimed herein. The device 900 includes a computing unit 901 to perform various appropriate actions and processes according to computer program instructions stored in a read only memory (ROM) 902, or loaded from a storage unit 908 into a random access memory (RAM) 903. In the RAM 903, various programs and data for the operation of the storage device 900 can also be stored. The computing unit 901, the ROM 902, and the RAM 903 are connected to each other through a bus 904. An input/output (I/O) interface 905 is also connected to the bus 904.

Components in the device 900 are connected to the I/O interface 905, including: an input unit 906, such as a keyboard, a mouse; an output unit 907, such as various types of displays, speakers; a storage unit 908, such as a disk, an optical disk; and a communication unit 909, such as network cards, modems, wireless communication transceivers, and the like. The communication unit 909 allows the device 900 to exchange information/data with other devices through a computer network such as the Internet and/or various telecommunication networks. The computing unit 901 may be formed of various general-purpose and/or special-purpose processing components with processing and computing capabilities. Some examples of the computing unit 901 include, but are not limited to, a central processing unit (CPU), graphics processing unit (GPU), various specialized artificial intelligence (AI) computing chips, various computing units that run machine learning model algorithms, digital signal processor (DSP), and any suitable processor, controller, microcontroller, etc. The computing unit 901 performs various methods and processes described above, such as an image processing method. For example, in some embodiments, the image processing method may be implemented as computer software programs that are tangibly embodied on a machine-readable medium, such as the storage unit 908. In some embodiments, part or all of the computer program may be loaded and/or installed on the device 900 via the ROM 902 and/or the communication unit 909. When a computer program is loaded into the RAM 903 and executed by the computing unit 901, one or more steps of the image processing method described above may be performed. In some embodiments, the computing unit 901 may be configured to perform the image processing method in any other suitable manner (e.g., by means of firmware).

Various implementations of the systems and techniques described herein above may be implemented in digital electronic circuitry, integrated circuit systems, field programmable gate arrays (FPGA), application specific integrated circuits (ASIC), application specific standard products (ASSP), system-on-chip (SOC), complex programmable logic device (CPLD), computer hardware, firmware, software, and/or combinations thereof. These various embodiments may include being implemented in one or more computer programs executable and/or interpretable on a programmable system including at least one programmable processor, , and the programmable processor may be a special-purpose or general-purpose programmable processor, and may receive data and instructions from a storage system, at least one input device and at least one output device, and may transmit data and instructions to the storage system, the at least one input device, and the at least one output device.

Program code for implementing the methods of the present disclosure may be written in any combination of one or more programming languages. These program codes may be provided to a processor or controller of a general computer, a dedicated computer, or other programmable data processing device, such that the program codes, when executed by the processor or controller, cause the functions and/or operations specified in the flow diagrams and/or block diagrams is performed. The program code can be executed entirely on the machine, partly on the machine, as a stand-alone software package partly on a machine and partly on a remote machine or entirely on a remote machine or server.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, random access memories (RAM), read-only memories (ROM), erasable programmable read-only memories (EPROM or flash memory), fiber optics, compact disc read-only memories (CD-ROM), optical storage devices, magnetic storage devices, or any suitable combination of the foregoing.

To provide interaction with a user, the systems and techniques described herein may be implemented on a computer having a display device (e.g., a cathode ray tube (CRT) or liquid crystal display (LCD)) for displaying information for the user; and a keyboard and pointing device (e.g., a mouse or trackball) through which a user can provide an input to the computer. Other types of devices can also be used to provide interaction with the user, for example, the feedback provided to the user may be any form of sensory feedback (e.g., visual feedback, auditory feedback, or tactile feedback); and may be in any form (including acoustic input, voice input, or tactile input) to receive the input from the user.

The systems and techniques described herein may be implemented on a computing system that includes back-end components (e.g., as a data server), or a computing system that includes middleware components (e.g., an application server), or a computing system that includes front-end components (e.g., a user computer with a graphical user interface or web browser through which a user can interact with implementations of the systems and techniques described herein), or a computer system including such a backend components, middleware components, front-end components or any combination thereof. The components of the system may be interconnected by any form or medium of digital data communication (e.g., a communication network). Examples of the communication network includes: Local Area Networks (LAN), Wide Area Networks (WAN), the Internet and blockchain networks.

The computer system may include a client and a server. The Client and server are generally remote from each other and usually interact through a communication network. The relationship of the client and the server is generated by computer programs running on the respective computers and having a client-server relationship with each other. The server may be a cloud server, also known as a cloud computing server or a cloud host, which is a host product in the cloud computing service system, and solves the defects of difficult management and weak business expansion in traditional physical hosts and virtual private servers ("VPS" for short). The server may also be a server of a distributed system, or a server combined with a blockchain.

It is to be understood that the steps may be reordered, added or deleted by using the various forms of flows shown above. For example, the steps described in the present disclosure may be executed in parallel, sequentially, or in different orders, as long as the desired results of the technical solutions in the present disclosure can be achieved, and no limitation is imposed herein.

### List of abbreviations

- AU: Access unit
- AV1: AOMedia Video 1 [2]
- AVC: ISO/IEC 14496-10 Advanced Video Coding (AVC) / ITU-T Rec. H.264
- EVC: ISO/IEC 23094-1 Essential video coding (EVC)
- HEVC: ISO/IEC 23008-2 High Efficiency Video Coding (HEVC) / ITU-T Rec. H.265
- NAL: Network Abstraction Layer
- NALU: Network Abstraction Layer Unit
- OBU: Open Bitstream Unit
- RTP: Real-time Transport Protocol [3]
- SEI: Supplemental Enhancement Information
- VVC: ISO/IEC 23090-3 Versatile Video Coding (VVC) / ITU-T Rec. H.266 [1]

### References

[1] ISO/IEC 23090-3:2024, Information technology - Coded representation of immersive media, Part 3: Versatile video coding, https://www.iso.org/standard/86516.html
[2] AV1 Bitstream & Decoding Process Specification, 2019-01-08, The Alliance for Open Media, https://aomediacodec.github.io/av1-spec/av1-spec.pdf
[3] RTP: A Transport Protocol for Real-Time Applications, RFC 3550, https://datatracker.ietf.org/doc/html/rfc3550

## Claims

1. A method for aggregating video data units, the method comprising:
- obtaining a plurality of video data units;
- determining at least a subset of the plurality of video data units; the subset comprising at least two video data units; and
- aggregating the subset to obtain an aggregating video data unit.

2. The method according to claim 1, wherein the aggregating video data unit is formatted as a new video data unit.

3. The method according to one of the previous claims, further comprising adding only one start code for the aggregating video data unit which corresponds to the subset; and/or
further comprising adding one combined header (header having reduced size) for the aggregating video data unit and/or the subset.

4. The method according to one of the previous claims, wherein aggregating is performed as long as there are one or more video data units to be aggregated; or wherein aggregating is performed as long as there are one or more video data units to be aggregated, wherein a function (e.g. more data in_payload()) is extended to indicated one or more video data units are to be aggregated.

5. The method according to one of the previous claims, wherein determining the at least a subset is performed so that video data units of the subset belong to a same logical group.

6. The method according claim 5, wherein the logical group comprises video data units of the subset belonging to a same coded picture (e.g. single coded picture or slices of a single coded picture) and/or comprising slices of a single coded picture; and/or
wherein the logical group comprises video data units of the subset belonging to a same access unit.

7. The method according to one of the previous claims, wherein determining the at least a subset is performed so that video data units of the subset consecutive in bitstream order are determined to be aggregated; and/or
wherein determining the at least a subset is performed so that aggregation only takes place within the same spatial layer and/or within the same temporal layer.

8. The method according to one of the previous claims, further comprising adapting or adding an information in aggregating video data unit, especially an offset, to indicate one or more starting positions of the aggregated video data units in the aggregating video unit.

9. The method according to one of the previous claims, further comprising adapting or adding one or more length information in an aggregating video data unit, especially a length, to indicate the size in bytes of the aggregated video data units in the aggregating video data unit.

10. The method according to one of the previous claims, further comprising adapting or adding an information in the aggregating video data unit, especially on a number of video data units, to indicate the amount of video data units aggregated in the aggregating video data unit.

11. The method according to one of the previous claims, further comprising assigning to the aggregating video data unit a video data unit type indicative of containing aggregated video data units, e.g. of different type or different classes (e.g. VCL and non-VCL aggregating NAL unit type).

12. A method for obtaining video data units, the method comprising:
- obtaining a video data unit, e.g. comprised in a video bitstream;
- determining if the video data unit comprises an aggregating video data unit;
- extracting a subset of the plurality of video data units from the aggregating video data unit.

13. The method according to claim 12, further comprising forwarding the unextracted subset of video data units or the video data units to be extracted dependent on the step of determining.

14. A bitstream generator for aggregating video data units, the bitstream generator comprising:
- an interface for obtaining a plurality of video data units;
- a processor for determining at least a subset of the plurality of video data units; the subset comprising at least two video data units; and
- wherein the processor is configured to aggregate the subset to obtain an aggregating video data unit.

15. A bitstream parser for obtaining video data units, the bitstream parser comprising:
- an interface for obtaining a video data unit, e.g. comprised by a video bitstream;
- a processor for determining if the video data unit comprises an aggregating video data unit; and
- wherein the processor is configured to extract a subset of the plurality of video data units from the aggregating video data unit.
